(19) **Europäisches Patentamt / European Patent Office / Office européen des brevets**

(11) **EP 4 576 860 A2**

(12) **EUROPEAN PATENT APPLICATION**

(43) Date of publication:
25.06.2025 Bulletin 2025/26

(21) Application number: 24212052.5

(22) Date of filing: 11.11.2024

(51) International Patent Classification (IPC):
H04W 16/28 $^{(2009.01)}$    H04B 7/06 $^{(2006.01)}$
H04W 4/80 $^{(2018.01)}$    H04W 64/00 $^{(2009.01)}$
H04W 84/12 $^{(2009.01)}$    G01S 5/02 $^{(2010.01)}$

(52) Cooperative Patent Classification (CPC):
H04W 16/28; G01S 5/0242; H04B 7/0617;
H04B 7/0695; H04W 4/80; H04W 64/00;
H04W 84/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.12.2023 US 202318391733

(71) Applicant: INTEL Corporation
Santa Clara, CA 95054 (US)

(72) Inventors:
• HEGDE, Mythili
  Bangalore (IN)
• PEDDIREDDY, Prathibha
  Bengaluru (IN)
• GUPTA, Sagar
  Ghaziabad (IN)
• AGARWAL, Anshu
  560037 Bangalore (IN)
• DAS, Sajal Kumar
  560115 Bangalore (IN)

• GUPTA, Jay Vishnu
  Bengaluru (IN)
• SANGLE, Parshuram
  Bengaluru (IN)
• PAMMI, Lakshmiravikanth
  534112 Dubacherla, Nallajerla Mandal (IN)
• R, Aneesh
  560035 Bangalore (IN)
• KROVVIDI, Srinivas
  500090 Hyderabad (IN)
• KUMAR, Brijesh
  282007 Agra (IN)
• PATTANAIK, Vatsala
  560066 Bangalore (IN)
• THAKUR, Jayprakash
  560035 Bangalore (IN)
• TURGEMAN, Avi
  7179210 Modiin (IL)

(74) Representative: Viering, Jentschura & Partner
mbB
Patent- und Rechtsanwälte
Am Brauhaus 8
01099 Dresden (DE)

(54) **APPARATUS AND METHODS OF SMART BEAM STEERING OF WIFI 8/WIGIG USING UWB SYSTEM AND NEW METHODS FOR OPTIMAL BANDWIDTH SHARING AND BLINDSPOT AVOIDANCE AND CREATING NETWORK SIGNAL QUALITY MAP**

(57) A communication device is provided including a first radio configured to determine a position of another communication device, wherein the first radio is a wideband near-field communication radio; and a second radio configured to form a communication link with the other communication device, wherein the second radio is a wireless local area network radio configured to generate a directional beam to form the communication link based on a parameter set; and an interface controller configured to determine the parameter set based on the determined position of the other communication device and to provide the parameter set to the second radio.

FIG 2

## Description

## Technical Field

The present disclosure relates to wireless network connectivity.

## Background

Nowadays, an access point (AP) of a wireless network (also denoted as WiFi network) may prioritize data transmission-receptions from the same client device, e.g. a laptop, based on the running applications and underneath transport channels quality of service (QoS) requirements and the AP may allocate its data transmission-reception bandwidth (BW) accordingly.

Further, a client device receiving a WiFi signal from an AP of the WiFi network may not have any prior knowledge about direction of the incoming WiFi signal.

Further, in a WiFi network, the AP may know blind spots having a weak WiFi signal. However, the client devices of the WiFi network may not know .the blind spots.

## Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG. 1 shows a power spectral density diagram of wireless standards;
FIG. 2 shows a circuit diagram illustrating a filter to reduce interference between UWB and Wi-Fi 6E frequencies;
FIG. 3 shows a diagram illustrating a comparative example of a network connection;
FIG. 4 shows a diagram illustrating an UWB-assisted wireless network connection;
FIG. 5 shows a diagram illustrating a framework of an UWB-assisted wireless network connection;
FIG. 6 shows a diagram illustrating a flow diagram of an UWB-assisted wireless network connection;
FIG. 7 shows a diagram illustrating a frame structure for an UWB-assisted wireless network connection;
FIG. 8 shows a diagram illustrating a flow diagram of an UWB-assisted wireless network connection;
FIG. 9 shows a diagram illustrating an antenna setting for a client device in an UWB-assisted wireless network connection;
FIG. 10 shows a diagram illustrating a table of various antenna settings for communication device in an UWB-assisted wireless network connection;
FIG. 11 shows a diagram illustrating an architecture using a centralized connectivity management suit for an UWB-assisted wireless network connection;
FIG. 12 shows a diagram illustrating a flow diagram for FIG. 11;
FIG. 13 shows a diagram illustrating an architecture using a software-defined gateway for an UWB-assisted wireless network connection;
FIG. 14 shows a diagram illustrating a flow diagram for FIG.13;
FIG. 15 shows a diagram illustrating a wireless network environment;
FIG. 16 shows a diagram illustrating blind spots in a network environment;
FIG. 17 shows a diagram illustrating data generation for signal quality depending on the client device location in the coverage area of an AP of the wireless network;
FIG. 18 shows a diagram illustrating signal quality enhancement from an AP of the wireless network;
FIG. 19 shows a diagram illustrating a flow chart of FIG.18;
FIG. 20 shows a diagram illustrating a wireless network;

## Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The word "over" used with regards to a deposited material formed "over" a side or surface may be used herein to mean that the deposited material may be formed "directly on", e.g. in direct contact with, the implied side or surface. The word "over" used with regards to a deposited material formed "over" a side or surface, may be used herein to mean that the deposited material may be formed "indirectly on" the implied side or surface with one or more additional layers being arranged between the implied side or surface and the deposited material.

Currently, WiFi connectivity, e.g. for WiFi 8 or WiGig, in a client platform (also denoted as client device, communication device or communication terminal device), e.g. a laptop system, does not have any prior knowledge about an incoming WiFi signal, e.g. its location of origin. That is, in a comparative example of a wireless technology which requires a beam scanning feature for beam forming, e.g. for directional antennas, the client device must scan the entire space around the device with periodical steps before being able to lock the desired signal direction from an AP. Hence, in comparative examples, wireless solutions continuously need to scan throughout the sphere to find a direction of arrival of a peak signal from the Access Point (AP) of the WiFi. However, continuous scanning of the peak signal consumes high radio frequency (RF) power in the client device and more hand-shake time with other wireless devices or APs. Further, it may be important for mmWave WiFi configured to determine the direction information of incoming signals because mmWave signals may be highly directional. Note, directional signals travel in a straight line and obstacles may block directional signals easily. Thus, knowing the direction of incoming signals can help mmWave WiFi systems to improve their performance in several ways. In other words, knowing the direction of an incoming signal can be used to improve the performance of WiFi networks by saving power, reliability, and security. Thus, a communication system that is any one of more cost-effective, less complex, and more accurate to determine the WiFi signal direction prior to scanning, optimizing the WiFi and dynamically handling the radiation pattern may be critical for emerging WiFi use cases.

However, currently, no solution is known where a wireless host device changes the radiation pattern of its antenna without beam scanning.

Thus, one aspect relates to smart beam steering, e.g. of WiFi 8/Wireless Gigabit (WiGig), and WiFi optimization using an ultra-wideband (UWB) eco-system. Illustratively, UWB may be used as it has high location accuracy as compared to existing location technologies because of low power, short radio signal and more immune to multipath interference. Comparatively it may be a relatively low cost and less complex mechanism. Further, the framework allows for any one of high throughput, better coverage, improved RFI, minimizing AP time scan to find the client by more than 10%, saving WiFi power in Omni vs. directional for client ~8 dB and 15 dB for AP, providing another Software as Service (SAAS) product and provides platforms ready for UWB easily scalable by leverage UWB FIRA standard. The framework described in detail below may be a systematic approach to solve the problem of predicting the WiFi signal direction before scanning to optimize any one of coverage, throughput and power by enabling dynamic radiation pattern switching and to assist mmWave WiFi (WiGig/WiFi 8) for fast and accurate beam steering. The described framework of smart beam steering of WiFi 8/WiGig using UWB eco-system may predict accurately the WiFi signal direction. Further, the framework may provide fast and accurate beam steering for WiFi 8/WiGig using UWB.

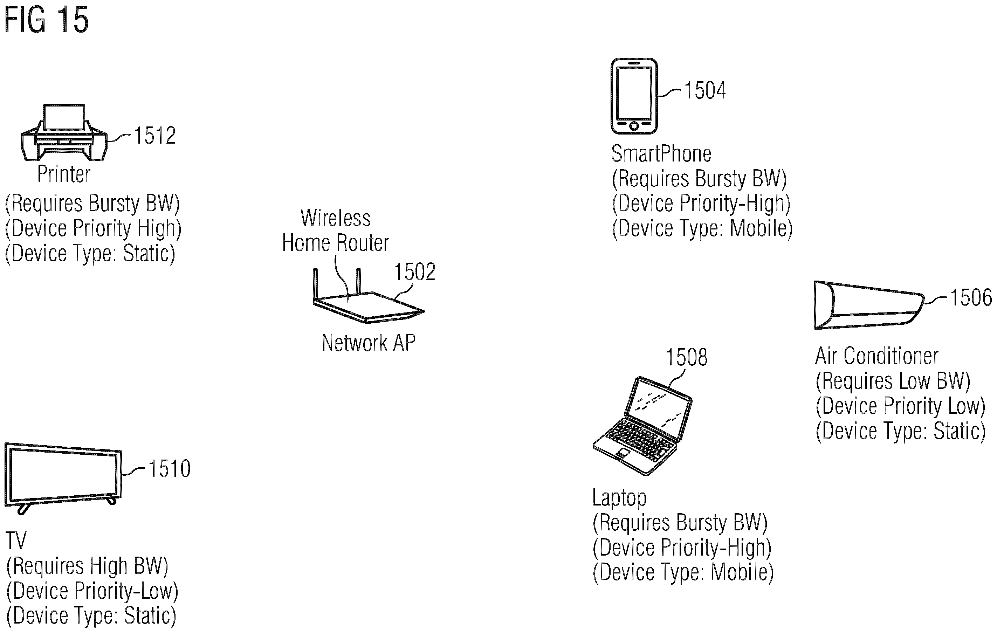

In another aspect, in WiFi networks there may be difficulties in data throughput (also denoted as bandwidth, BW) distribution among communication terminal devices connected to the same AP due to non-availability of information pertaining to the device type and device priority of the connected communication terminal devices. Illustratively, a WiFi Network may be open for a plethora of various types of connecting devices. The device type and their respective requirements may vary widely. For example, as shown in FIG.15, many devices 1504, 1506, 1508, 1510, 1512 may operate simultaneously and may be sharing the same AP 1502 bandwidth in a local network. Thus, laptops 1508 and mobile phones 1504 being mobile devices may require a bursty type of data transmission-reception with higher BW. These mobile devices 1504, 1508 may be considered as high priority devices as a user may run important applications, programs, and activities on these devices 1504, 1508. However, currently, data transmission-receptions from the same device, e.g. laptop 1508, may be prioritized based on the running applications and underneath transport channels Quality of Service (QoS) requirements and the AP may allocate the data transmission-reception BW accordingly. Further, there is no means currently known, where different communication devices 1504, 1506, 1508, 1510, 1512 using the same AP 1502 bandwidth have been provided different priorities to get higher BW over other devices 1506, 1512, 1514, when they are sharing the same AP 1502 BW in the same local network.

Illustratively, according to one aspect, when watching TV 1510, when a video call comes into mobile phone 1504 or laptop 1508, then the AP 1502 automatically provides the mobile phone 1504 a higher BW than the TV 1510, as a TV program may be less important and a mobile device 1504, 1508 may be given higher priority. This could be because when a user may be busy with the mobile device 1504, 1508, the user may not pay attention to the program in TV 1510. However, this is only one of many possible use cases in which the potential BW of a device 1506, 1510, 1512, 1514 is downgraded below its hardware potential to improve the BW of the device 1504, 1508 having a higher priority towards its hardware maximum BW than the other devices 1506, 1510, 1512, 1514 connected to the same AP 1502.

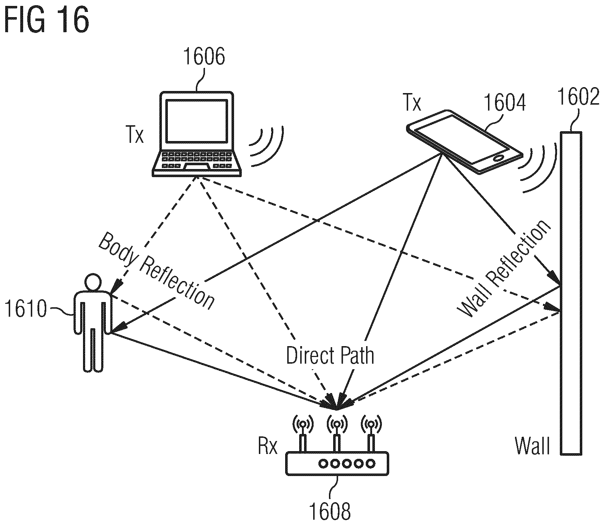

In yet another aspect, as shown in FIG.16, reflections from a wall 1602 or the body of a person 1610 may cause constructive as well as destructive signal interferences leading to signal fluctuations at the receiver side, the receiver of the AP 1602 or the receiver of a client platform 1604, 1606. In other words, there may be a main path of a communication link between the AP 1608 and client platforms 1604, 1606 and reflected paths (secondary communication links) between the AP 1608 and the client platforms 1604, 1606 due to a large number of reflected rays. Thus, there may always be maxima and minima of the WiFi signal formed at local positions in the environment of the AP 1608. Hence, obstacles 1602, 1610 may lead to constructive signal interferences and destructive signal interferences at different locations in the AP coverage area. The destructive signal interferences may lead to the WiFi network having blind spots in the coverage area. These blind spots may be locations pre-known to the AP 1608 but not known by the devices 1604, 1606 connected or to be connected to the AP 1608. If the device 1604, 1606 is placed in a blind spot, it may always perform poorly and may degrade user experience. If this condition, e.g. a device 1604, 1606 is in a blind spot, may be detected and intimated to a user in case of mobile devices 1604, 1606 then the user can move the device 1604, 1606 to a location of better signal. Further, constructive signal interferences may create opportunity spots that reinforce a WiFi signal for the communication terminal devices.

In a comparative example, the AP in a WiFi Network may allocate different priorities to different connected client platforms to distribute the data throughput by AP BW among simultaneously competing client platforms located at blind spot areas. Thus, in the comparative example, there may be a network poor signal quality warning, e.g. during a video call received at the mobile client platform located in a blind spot, and some indications in WiFi signal strength icon. However, this may be not a clear indication to a user about a blind spot of the WiFi network or how to improve the connectivity.

Thus, by adjusting the device position or the AP position as described in detail below, this situation can be avoided which helps to improve the throughput and user experience using the client platform. Thus, the provided method provides benefits for differentiating devices in a network and enhances user experience.

Alternatively, or in addition, in case of static devices as client platforms, the AP could employ any of the methods described for signal improvement. In this way, always optimum performance could be achieved for mobile and static client platforms.

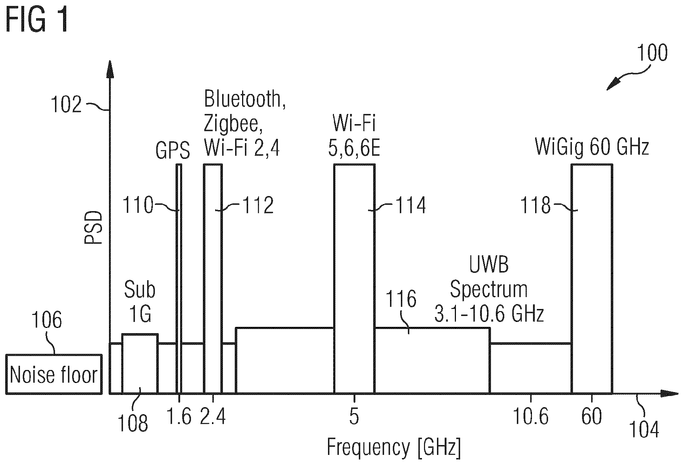

FIG.1 shows a frequency spectrum 100 illustrating the power spectral density (PSD) 102 as a function of frequency 104 of wireless standards. Illustrated are a noise signal 106, sub 1G signals 108, global positioning signals (GPS) 110, signals at about 2.4 GHz (e.g. Bluetooth, ZigBee, WiFi, etc.), WiFi 5, WiFi 6, WiFi 6E (e.g. at 5 GHz), WiGig (e.g. at about 60 GHz), and UWB spectrum in a range from about 3.1. GHz to about 10.6 GHz.

Ultra wideband (UWB) is a wideband near field radio technology (802.15.4/4z) that uses very low power short-range, high bandwidth communications over a large portion of the radio spectrum. UWB may be used for sensing, e.g. proximity detection, gesture, out looker, etc., or for ranging, e.g. positioning, track my PC, locate valuables, smart office control, etc., just to name a few use cases. UWB tracking can reach accuracy in the order of few (1-3) tens of a centimeter, and UWB can reach a line of sight (LOS) range of up to 200m.

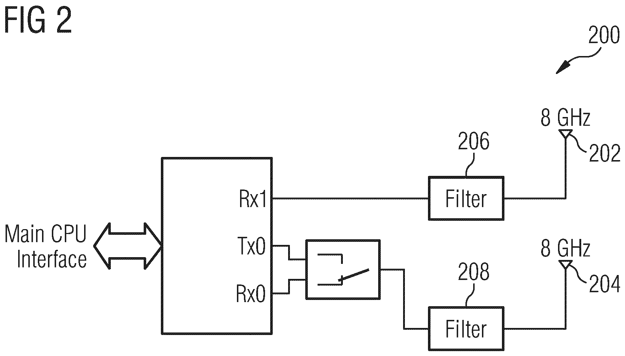

In various examples, UWB may be based on a frequency of 7987.2 MHz with a bandwidth of 499.2 MHz. Using a UWB filter 206, 208, as shown in FIG.2, addresses a coexistence of the UWB and the WiFi 6E (see FIG.1) in the communication device. In detail, FIG.2 shows a circuit illustrating filters 206, 208 coupled to antennas 202, 204 to reduce interference between UWB and WiFi 6E frequencies.

In various examples, a UWB signal corresponding to a location of an AP may be used to dynamically change a WiFi radiation pattern of the client platform before scanning its environment for the AP to be connected with. In other words, the WiFi antenna on a client platform does not have any prior knowledge about the incoming WiFi signal direction from the AP.

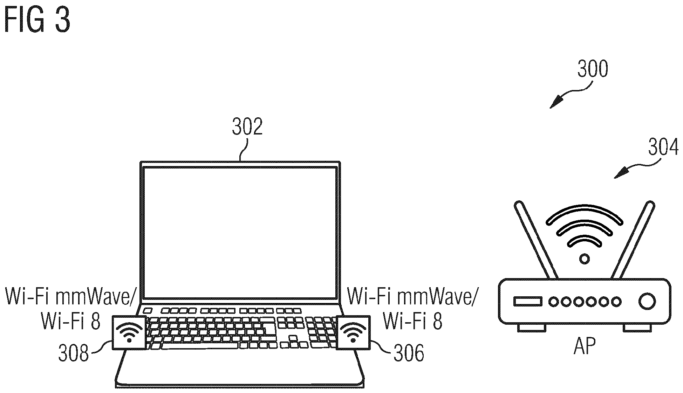

FIG.3 illustrates a comparative example of a communication system 300 for connecting a client platform 302 with an AP 304. Here, the client platform's 302 WiFi radio 306, 308 scans in all the direction to get a beam direction of a maximum signal strength from the APs 304 WiFi signal. However, this consumes high RF power to lock the WiFi beam towards the AP 304. Coverage, throughput and power may be not optimized as the client platform 302 must scan the WiFi prior to lock the WiFi beam. Illustratively, coverage, throughput and power of the WiFi signal may not be optimized for the client platform 302.

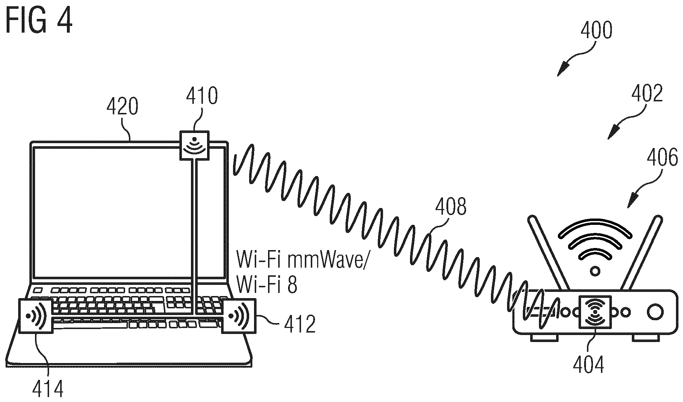

The client platform 420 using the UWB-assisted WiFi optimizer illustrated in FIG.4 addresses and overcomes at least some of the limitations of the comparative example illustrated in FIG.3, e.g. by leveraging the UWB eco-system. Here, the client platform 420 using an UWB initiator 410 uses the tracking of a UWB signal 408 corresponding to the location of the AP 402 having a UWB responder 404 to accurately predict the WiFi signal direction from the WiFi antenna(s) 406 from the AP 402. Thus, dynamic radiation pattern switching of the client platform 420 allows fast and accurate beam steering, e.g. for WiGig/WiFi 8, using UWB 408. In other words, the client platform 420 may have an UWB-assisted WiFi optimizer module (also denoted as UWB initiator) 410 and a smart beam steering framework (in FIG.4 illustrated as connection to the WiFi antennas 412, 414) that locates a WiFi AP 402 to steer the antenna beam for WiFi 8/WiGig antenna module 412, 414 of the client platform 420 to accurately predict the WiFi signal direction from the AP 402. This method may provide dynamic radiation pattern switching of the WiFi antenna module 412, 414 on the client platform 420, e.g. based on a real time position of the AP 402. This may result in fast and accurate beam steering for WiFi 8/WiGig for the client platform 420 using UWB.

Note, UWB-assisted WiFi optimizer 410 of the client platform 420 communicates with UWB-capable AP 402 or an UWB-responder 404, e.g. an UWB tag or UWB dongle, associated to the AP 402 configured to determine an accurate position, e.g. location, of the AP 402 in the environment of the client platform 420.

After determining the location of the AP 402, a WiFi antenna 412, 414 of the client platform 420 may steer the WiFi beam towards the AP 402. This way, the client platform 420 may dynamically change the WiFi radiation pattern before scanning the WiFi environment of the client platform 420 for a WiFi signal from the AP 402 indicating its position. Thus, the client platform 420 improves coverage, throughput and power of the WiFi communication link.

In other words, an AP 402 location known by the client platform 420 prior to establishing the WiFi communication link with the AP 402 may support enhanced use cases in WiFi which rely on beam forming. The client platform 420 utilizing UWB-assisted WiFi may have the potential to provide an optimized smart beam steering of WiFi 8/WiGig that may result in optimizing power, coverage and throughput of legacy WiFi.

Various further use cases for enabling UWB-assisted WiFi are possible, e.g. where a UBW device 404, 410 external or attached to the client platform 420 or AP 402 can be used, e.g. upgrading existing client platforms and APs, to enable UWB-capabilities in a client platform 420 and a WiFi AP 402.

In one use case, a client platform, e.g. laptop, may have a built-in UWB capability and the client platform leverages UWB-enabled device. In other words, the UWB-enabled initiator may be located in the client platform.

In another use case, an AP may have a built-in UWB capability and the AP leverages UWB-enabled device, e.g. based on an UWB dongle or UWB tag. In other words, the UWB-enabled responder may be located in the AP.

In another use case, the client platform may have a software-defined gateway communicating using a spread spectrum AP. In other words, a WiFi-to-UWB communication mechanism may be located in the client platform.

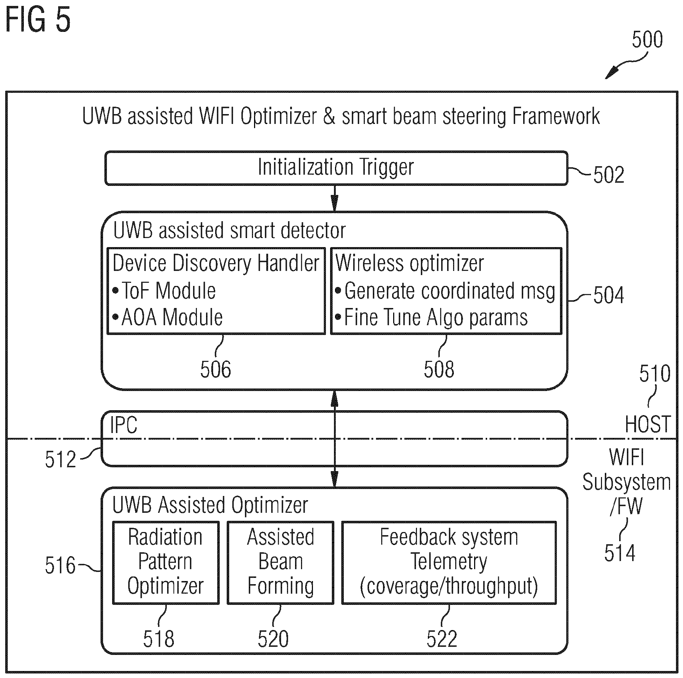

FIG.5 shows a block diagram illustrating an UWB-assisted WiFi optimizer and smart beam steering framework 500. Illustratively, a UWB-assisted smart detector 504 associated with a host 510, e.g. the client platform as described before, determines, upon a trigger signal from an initialization trigger 502, a location of a UWB-capable WiFi AP in its environment as described above. The client platform may determine the location of the AP in its environment using a device discovery handler 506, based on any of an time of flight (ToF) measurement and an angle of arrival (AoA) measurement. A wireless optimizer module 508 of the host 510 may generate a coordinated message for a WiFi subsystem 514 of the client platform, e.g. including or indicating a parameter set for the WiFi antenna setting, e.g. an orientation for a directional beam. The client platform may take inputs from WiFi subsystem to fine tune algorithm parameters, e.g. in an implemented feedback system, e.g. to improve determining the position of the AP. The framework 500 may include an inter-processor communications (IPC) mechanism 512 to provide communication between the UWB-assisted smart detector 504 of the host 510 and the UWB-assisted optimizer 516 of the WiFi subsystem (also denoted as WiFi framework). The UWB-assisted optimizer 516 of the WiFi subsystem may, upon receiving the coordinated massage from the wireless optimizer 508 indicating the location of the AP in the environment of the client platform, may tune the WiFi antenna setting accordingly. For example, the UWB-assisted optimizer 516 may have any one of a radiation pattern optimizer 518, an assisted beam forming 520, and a feedback system telemetry 522, e.g. for optimizing the WiFi coverage and/or throughput (BW).

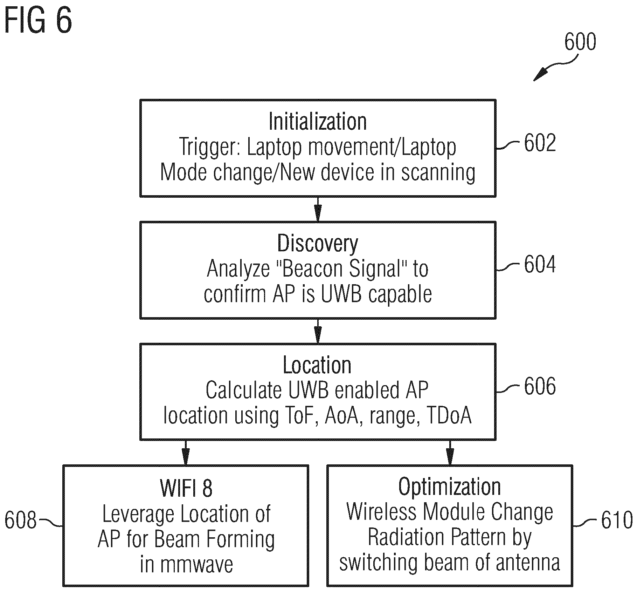

Illustratively, the framework 600 may be considered as a multi-stage methodology illustrated in the flow diagram shown in FIG.6 using the modules of the framework illustrated in FIG.5.

The framework 600 may include an initialization stage 602. The initialization stage 602 may identify the trigger signal that may cause the UWB-assisted smart detector module on the host to start. A trigger signal may be any one of a physical movement of the client platform (e.g. laptop) movement, a change of operational mode, e.g. for a laptop open its lid, closing its lid, tent, tablet, etc., or an addition of a new AP in the environment of the client platform. This may ensure that the algorithm may only be started when necessary. This may improve the performance and efficiency of the algorithm configured to determine an AP.

The framework 600 may include a discovery stage 604. The discovery stage 604 may identify the presence of an UWB-capable WiFi AP near the client platform. The IEEE 802.11 standard defines a beacon frame that may be used by APs to advertise their presence and capabilities to nearby client platforms.

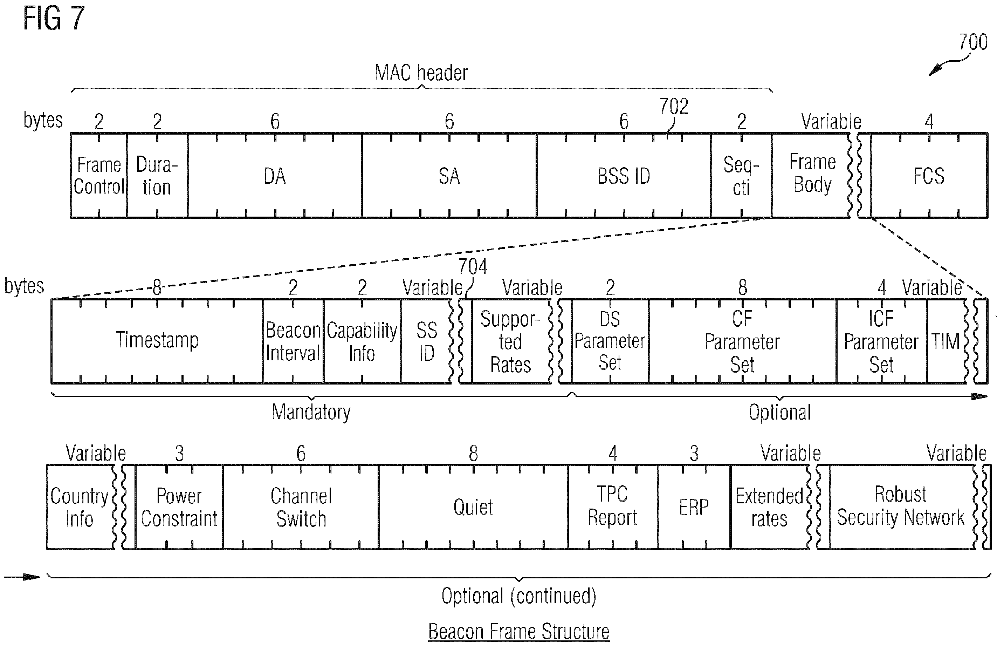

FIG.7. shows an example of a beacon frame 700 and capability field. The beacon frame includes a number of fields, including any one of the following:

- a service set identifier (SSID) 704 being the name of the WiFi network;
- a basic service set identifier (BSSID) 702 being the unique MAC address of the AP;
- supported channel information that indicate the radio channels that the AP supports;
- supported rate information that indicate the data rates that the AP supports;
- capability information that indicate the capabilities of the AP, such as whether it supports UWB; and
- e.g. in case of a UWB tag or UWB dongle, information of the UWB tag or UWB dongle corresponding to the associated AP,
- etc., just to name a few.

For example, the host can identify that the WiFi AP may be UWB-capable by checking the capability information, e.g. a capabilities field for UWB: (0x4000), in the beacon frame. If the capability information includes the UWB capability, then the AP may be UWB capable, or a UWB-tag or UWB-dongle may be associated to an AP.

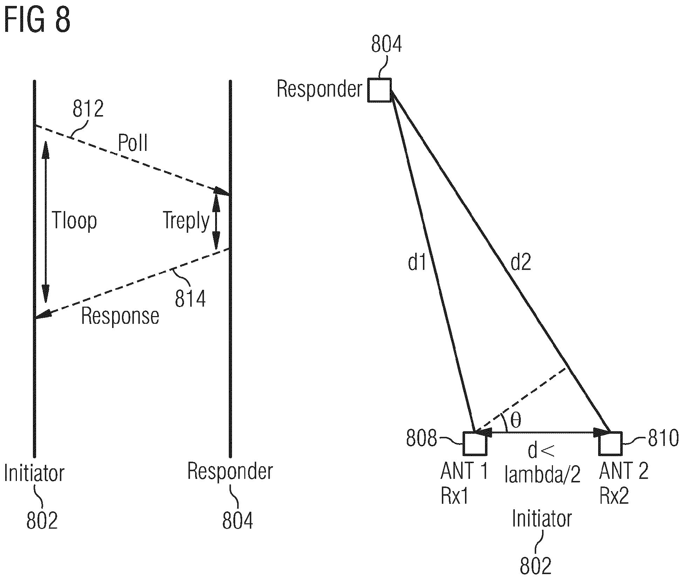

Referring to FIG.6, the framework 600 may further include a location stage 606. The location stage 606 may determine a location of a WiFi AP that was determined in the discovery stage 604. The location stage 606 may use UWB capability to precisely locate the WiFi AP using any one of angle of arrival (AoA) information for angle measurement and time of flight (TOF) for distance measurement. UWB may be used to determine the location of the AP relative to client platform accurately by measuring the time it takes for radio signals to travel from the AP to multiple reference points, e.g. anchors, as illustrated in FIG.8. The calculation may be based on TOF. TOF may be a method of measuring the distance between two points by measuring the time it takes for a signal to travel from one point to the other. In UWB, the signal may be a short pulse of radio waves.

As illustrated in FIG.8, the client platform (initiator 802) sends a poll signal 812 to the AP (responder 804), and - after a reply time $T_{reply}$ - the AP sends response signal 814 to the client platform. The time between sending the poll signal 812 and receiving the response signal 814 - also denoted as $T_{loop}$ - corresponds to the distance between client platform and AP. A client platform having multiple antennas 808, 810 can determine different times $T_{loop}$ as the path length d1, d2 between client platform and AP may be different due to an angular difference $\theta$ of the antennas 808, 810 to the AP.

Thus, the range measurement may be done by polling 812 from the initiator 802 to the responder 804 and response 814 from the responder 804 to initiator 802 and the AoA $\Delta\varphi$ by:

$$\text{ToF} = (T_{loop} - T_{reply})/2$$

$$\text{Distance} = \text{ToF} * \text{Speed of light}$$

$$(*\text{ToF: Time of Flight})$$

Angle of Arrival (AoA) measurement is done-

$$\Delta\varphi = \varphi_{R \times 1} - \varphi_{R \times 2}$$

$$= 2\pi \times f \times \Delta t$$

$$= 2\pi \times f \times \frac{p}{c}$$

$$= 2\pi \times \frac{d \times \sin\theta}{\lambda}$$

$$\theta = a\sin\left(\frac{\Delta\varphi \times \lambda}{2\pi \times d}\right)$$

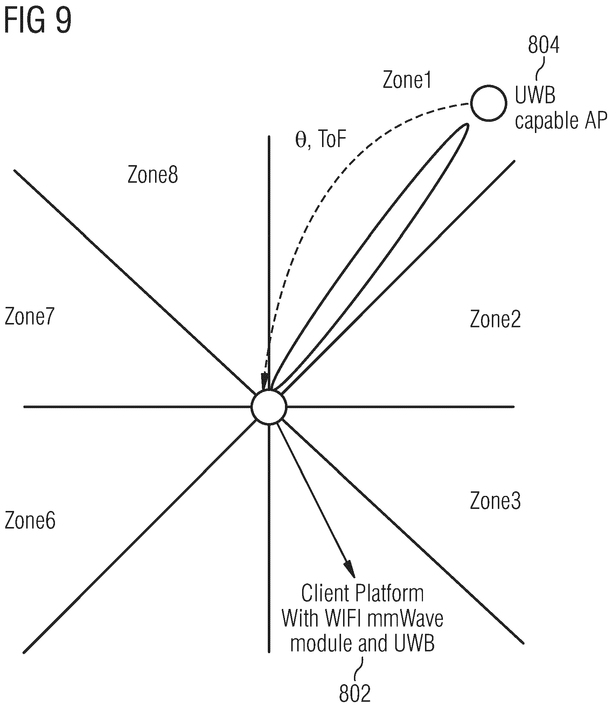

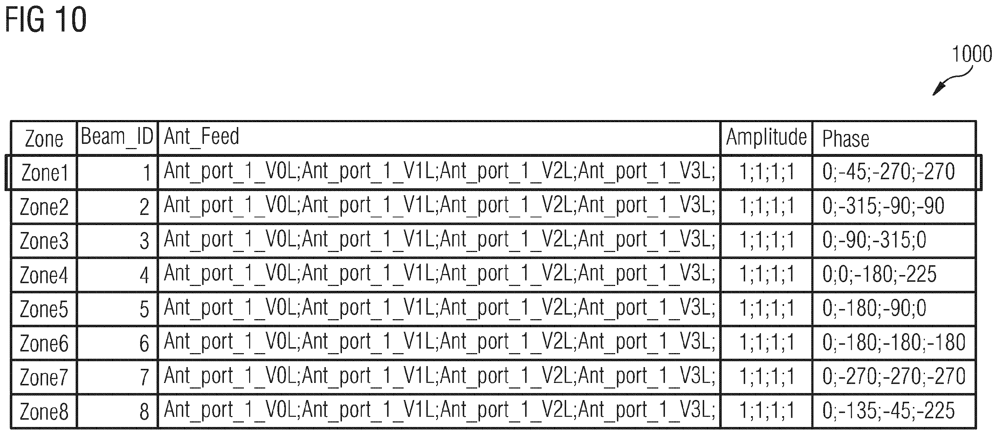

Referring to FIG.6, the framework 600 may further include an optimization stage 610. The optimization stage 610 may feed the determined location of the WiFi AP to the WiFi subsystem 514 of the client platform (see FIG.5). The client platform can leverage determining the location of the AP based on any one of the following: after precise calculation of AoA and ToF between the client platform and AP, zone selection around the client platform will happen based on AoA and ToF, as illustrated in FIG.9, and mmWave may be used for directional antenna having multiple antenna feed elements with different amplitude and phase combinations to make them radiate in desired direction. A particular combination of amplitude and phase from antenna beam codebook 100 as illustrated in the table shown in FIG.10 result in a unique beam ID in Zone1. The more directional the antenna beam is the more number of zones can be added to improve the accuracy of determining the AP position, e.g. as a feedback mechanism 608 (see FIG.6).

The table in FIG.10 shows the beam codebook for a 4-element mmWave antenna module. The amplitude and phase combination of the antenna elements results in unique Beam ID e.g. for Beam ID = '1' with amplitude (1; 1; 1; 1) and phase (0; -45; -270, -270) corresponds to Zone1.

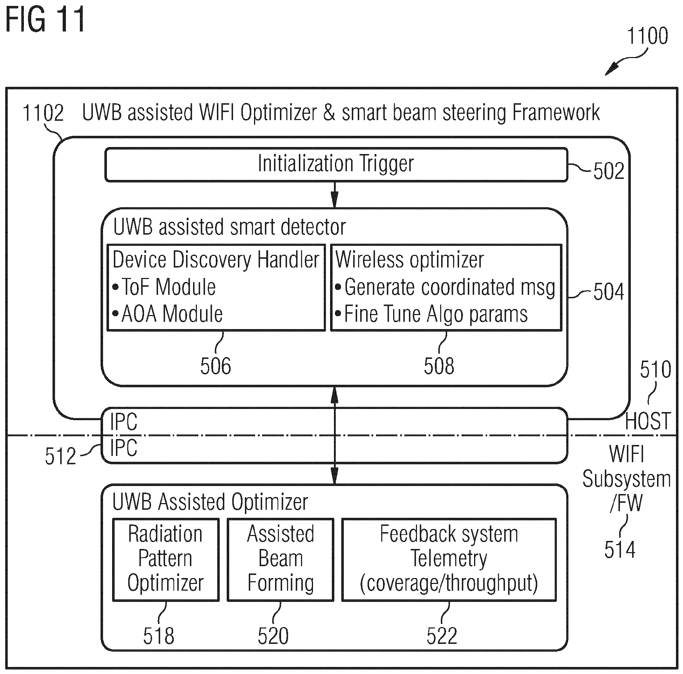

As illustrated in FIG.11 to FIG.14, there may be various architectural options for implementing the UWB-assisted framework.

For example, as illustrated in FIG.11, the framework 1100 may be implemented using a centralized connectivity management suit 1102. Various client platform vendors provide a connectivity management suit 1102 on the host 510 that caters/interworks with all connectivity modules on the client platform 510. For example, a connectivity management suit 1102 on a host may cater to all connectivity modules and can be leveraged to implement the host side.

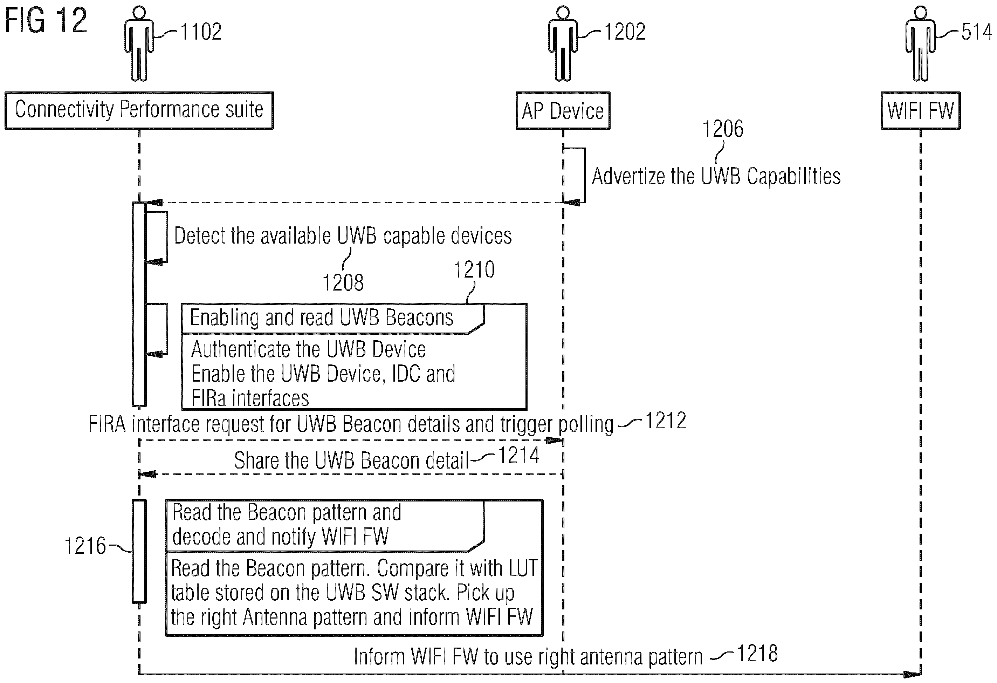

FIG.12 shows a flow diagram illustrating using a centralized connectivity management suit 1102 of FIG.11.

Here, the connectivity management suit 1102 (also denoted as connectivity performance suit 1102) receives an advertise of the UWB-capabilities 1206 form an AP 1202, as described in more detail above. The connectivity management suit 1102 detects 1208 the available UWB-capable AP devices, e.g. the AP 1202. The connectivity management suit 1102 enables and reads the UWB beacon 1210, e.g. authenticates the UWB-capable device (e.g. the AP 1202), enables the UWB-capable device, and optionally enables an identification card (IDC) interface and/or a fine ranging (FiRa) interface for UWB. For example, the FiRa interface requests 1212 the AP 1202 for details of the UWB beacon and triggers the polling (see also Fig.8). The APs 1202 response shares 1204 the UWB beacon details with the connectivity management suit 1102. The connectivity management suit 1102 may read 1216 the beacon pattern and may decode and notify 1218 the WiFi subsystem 514 of the client platform via the IPC (see FIG.11). For example, the connectivity management suit 1102 may read the beacon pattern and compares it with a look-up table (LUT) stored on the UWB software stack. The connectivity management suit 1102 may pick up the right antenna pattern and may inform 1218 the WiFi subsystem 514 of the client platform accordingly.

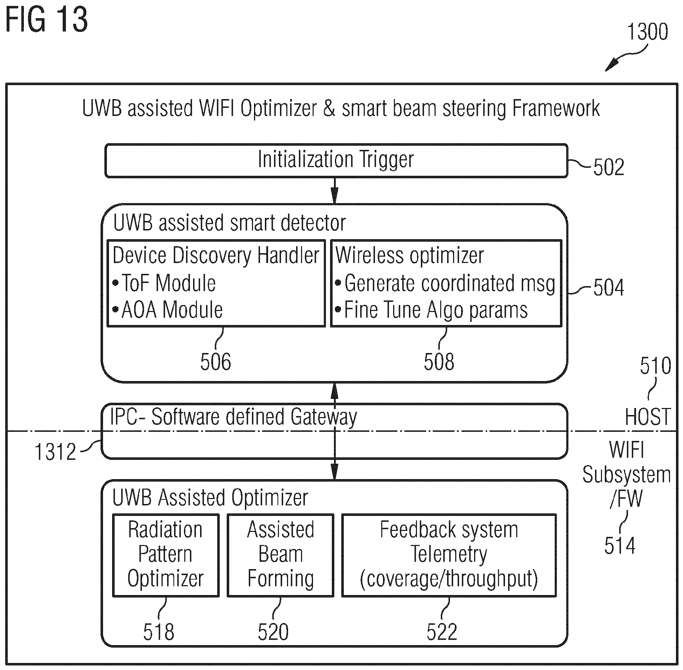

As another example, the UWB framework 1300 may be implemented using a standalone approach using a software-defined gateway 1312, as illustrated in FIG.13. The software-defined gateway 1312 can use a spread spectrum for communication between the UWB-assisted smart detector 504 and the UWB-assisted Optimizer of the WiFi subsystem 514 by modulating the signal over a wide range of frequencies. This may make the signal more resistant to interference and jamming. The software-defined gateway 1312 can use any one of a frequency hopping spread spectrum (FHSS) or direct sequence spread spectrum (DSSS) to communicate between the UWB-assisted smart detector 504 and the UWB-assisted Optimizer of the WiFi subsystem 514.

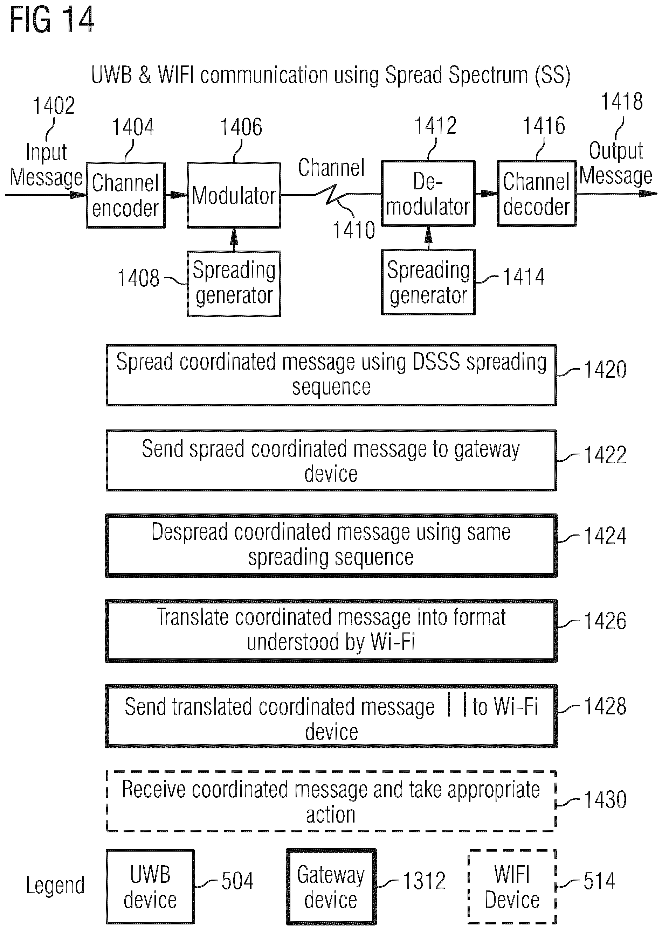

FIG.14 shows an example of a software-defined gateway 1312 using spread spectrum to communicate between the UWB-assisted smart detector 504 and the UWB-assisted Optimizer of the WiFi subsystem 514. A channel encoder 1404 may encode the input message 1402 of an UWB-capable device. The wireless optimizer in an UWB-assisted smart detector may generate a coordinated message 1420 referred to as signal that will be used by the spread spectrum (SS) technique. The software-defined gateway modulates 1406 the signal using spread spectrum using a spreading generator 1408. This spreads the signal over a wide range of frequencies. The software-defined gateway then transmits 1422 the signal to the WiFi subsystem 514 through a channel 1410. The WiFi connectivity module 514 receives the signal and demodulates 1424 it using spread spectrum, e.g. de-spreads the coordinated message using the same spreading sequence, using a demodulator 1412 and a spreading generator 1414. The software-defined gateway 1312 may translate 1426 the coordinated message into a format the WiFi subsystem understands, e.g. using a channel decoder 1416, and sends 1418, 1428 the translated coordinated message to the WiFi subsystem 514. The WiFi subsystem 514 receives the coordinated message and takes appropriate action (e.g. see FIG.9). For example, the WiFi subsystem 514 may recover the original signal enabling the WiFi subsystem 514 to receive the AP location information for radiation pattern optimization and assisted beam forming.

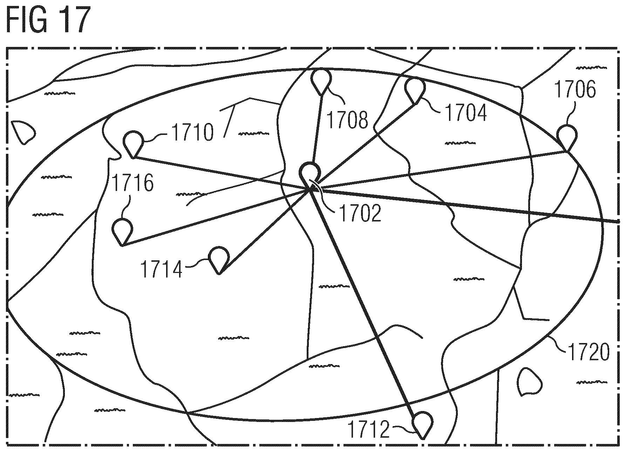

Alternatively, or in addition, a communication device and methods are provided for optimal BW sharing and blind spot avoidance. For example, the AP may create a local network signal quality map, e.g. a localize relative signal strength for certain positions 1704, 1706, 1708, 1710, 1712, 1714, 1716 in the coverage area 1720 of the AP 1702, e.g. as a map, as illustrated in FIG.17. The AP 1702 may distribute a total available data BW at any particular instant among different competing connected communication devices 1704, 1706, 1708, 1710, 1712, 1714, 1716 in a WiFi network. Thus, the AP 1702 may allocate different BW to different communication devices 1704, 1706, 1708, 1710, 1712, 1714, 1716 based on user-defined priority levels for the different communication devices 1704, 1706, 1708, 1710, 1712, 1714, 1716. The AP 1702 maintains the communication device identity (BSSIDs) and corresponding priority level and device type info in a stored table:

| For each device- the | Max BW requirement | Device priority | Device type (static/mobile) |
|---|---|---|---|
| AAFFAF | 100 Mbps | 2 | static |

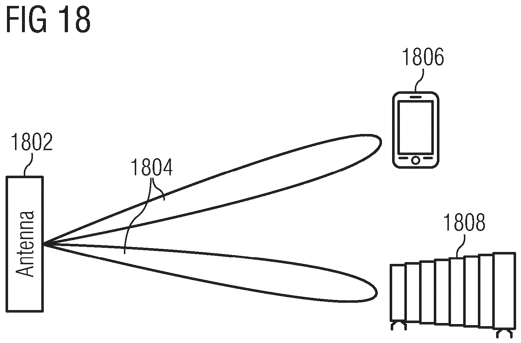

The AP may use the table for BW distribution. The AP 1702 may also create a signal heat map capturing the signal quality from different communication devices 1704, 1706, 1708, 1710, 1712, 1714, 1716 at different locations in the WiFi AP coverage area 1720. The table may be used to indicate the user if the user device is located at a blind spot area. This way, the user may move the position of the device say in case of a mobile device 1806 or can change the location of the AP if the device may be fixed at one location. Alternatively, or in addition, the AP may control the antenna 1802 for beam forming 1804, or any other enhancement method, to cover a blind spot and provide network in all the areas if the position of the AP or the communication device 1808 is fixed, as illustrated in FIG.18. Regarding the fixed position, the table may already include the device type as mentioned before.

Thus, this method may provide any one of the following advantages:

- help to distribute available data BW among various connected communication devices in the network optimally;
- users may assign different priorities to different communication devices as per their requirement;
- improves the overall user experience due to dynamic allocation of the available BW among the competing connected communication devices in an AP;
- available BW may always be shared and utilized appropriately;
- using user indication may improve the signal quality to mobile type of communication devices ; and
- the signal quality to static type of communication devices may be improved by using a signal enhancement method.

Thus, communication devices may always perform better due to better signal quality and better BW availability.

As shown in FIG.15, there may be various types of connectivity for communication devices 1504, 1506, 1508, 1510, 1512, e.g. with various data rate requirements and various levels of user importance, participating in the same wireless network. The AP 1503 may differentiate the connected communication devices 1504, 1506, 1508, 1510, 1512 through some identity to prioritize one communication device 1504 over one or more other communication devices 1506, 1508, 1510, 1512 in a wireless network.

Any one of the following techniques may be used to identify different communication devices to differently priorities:

- a service set may be a logical grouping of wireless network devices which may be identified by the same SSID (Service Set Identifier). SSIDs serve as "network names", consists of 32 characters (max). The transmitter prefaces its transmissions with a service set identifier (SSID). The receiver uses the SSID to filter through the received signals and locate the one it wants to listen to.
- Basic service sets (BSS) may be a subgroup of devices within a service set which may be additionally also operating with the same physical layer medium access characteristics (i.e. radio frequency, modulation scheme, security settings etc.) such that they are wirelessly networked. Devices within basic service sets may be identified by BSSIDs (basic service set identifiers), which may be 48-bit labels that conform to MAC-48 conventions. Thus, here the AP 1502 may use BSSIDs to differentiate the communication devices for providing different priorities to different communication devices.

A user could also provide different priority levels for different communication devices in the network and these devices are identified by their BSSIDs. As an example, an AP may support a maximum bandwidth (BW_MAX), this will be shared by several (e.g. N number) connected communication devices. During allocation or dynamic distribution of BW to different communication devices. An algorithm checks the priority of the active communication devices and priorities of the running applications. Based on that the AP allocates higher BW to those communication devices compared to low priority communication devices when there may be a need for BW sharing e.g. simultaneous data transmission-receptions. Note, a low priority may be anything below a maximum priority, and may refer to a number on a scale (e.g. 0 to 9), a tier grade (e.g. tier 1,..., tier 4), or category (e.g. lowest,..., default,..., highest). In case of simultaneous transmission-reception cases, the algorithm running on the AP or a cloud server may provide to a high priority communication device a BW up to maximum BW, e.g. corresponding to the hardware-level of the communication device. Remaining BW of the AP may be then provided to other competing communication devices, e.g. in a similar manner corresponding to their priority. If the (remaining) communication devices are of a similar priority, then BW_MAX may be averaged (e.g. BW_MAX/N) and allocated to each of the communication devices accordingly. Note that the communication devices provide the information to the AP. Hence, the information do not need to be entered in the AP by the user.

Alternatively, or in addition, the AP may generate a signal quality map through continuous learning for blind spot avoidance and signal boosting:

| A home/office WiFi network may be small and its | Channel No. | Signal Quality | Last time active |
|---|---|---|---|
| X,Y,Z | 7 | Good | 20/11/23 - 11:59 |
| X2,Y2,Z2 | 5 | Poor | 19/11/23 - 2:59 |
| X3,Y3,Z3 | 16 | Worst | 20/11/23 - 3:27 |
| ... | ... | ... | ... |

The AP may have access to the table and the AP can learn the most used communication devices for any given point of time.

The AP may use the signal quality map for discovering that a communication device is located in a blind spot area. Thus, during actual operation, the AP may use these information, e.g. through continuous learning of communication device location vs. signal quality, to create a signal map, e.g. as illustrated in FIG.17. The AP may know from the table the device type and mobility type.

If the device is a static type device placed in a blind spot, e.g. as determined by the AP using the above stored signal quality map, then the AP may use one of the pre-defined techniques, e.g. beam forming, beam stirring etc., to strengthen the signal quality at the communication device location. This way, the AP may perform a signal boosting in a blind spot for static communication devices.

If the device is a mobile device type, then the AP may send a recommendation to the mobile device to move the device or rotate the device to a close by opportunistic location for getting better data throughput, e.g. as a kind of a vector arrow on a display of the communication device pointing towards an area or location of stronger signal strength. Thus, the AP may provide a user indication for moving the mobile communication device for better signal quality.

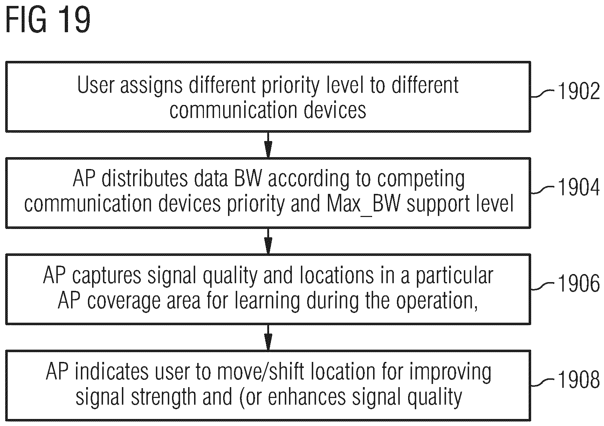

In other words, as illustrated in the flow chart in FIG.19, a user assigns, in 1902, different priority levels to different communication devices, and the BSSIDs differentiate each communication device. At any specific instant, when the AP distributes BW among competing communication devices, the AP algorithm checks the table (see above - stored locally in the AP or on a cloud server) and distributes, in 1904, the data BW according to the competing communication devices priority and Max_BW support level. High priority devices are provided their Max_BW and then AP distributes remaining BW among low(er) priority communication devices. During the operation, in a particular AP coverage area, the AP captures 1906 signal quality and locations, e.g. in a table, for learning. Later, the AP may use this information to know where blind spots are located in the coverage area.

Later during the operation, if the AP finds any mobile device is located at a known blind spot, the AP indicates the user to move/shift the location. For static devices, the AP may employ some pre-defined techniques to enhance signal quality.

This way, the method may improve user experience in wireless network communication devices. The dynamic BW distribution based on communication device priority and blind spot avoidance may help to enhance the data rate and thus improve the overall performance of the communication devices in the wireless network.

In other words, the AP may provide allocating different data BW level based on connected device type in a WiFi network and not only based on the running application type. Alternatively, or in addition, the AP may provide for blind spot identification and indication to the user device to take corrective action to prevent signal quality degradation, improve signal strength, and/or improve throughput.

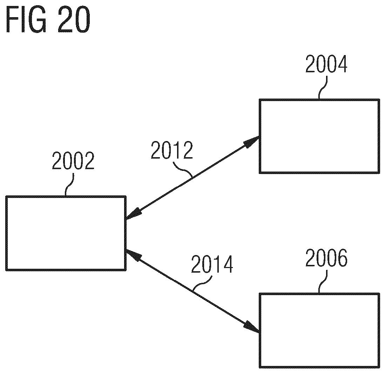

FIG.20 shows a diagram illustrating a first communication device 2004, 2006 and a second communication device 2002 that may be communicatively coupled via a communication link 2012, 2014.

Each of the first communication device 2004, 2006 and the second communication device 2002 may include a first radio and a second radio.

The first radio of each of the first communication device 2004, 2006 and the second communication device 2002 may be configured to determine a position of the second communication device 2002 for the first communication device 2004, 2006. The first radio may be a wideband near-field communication radio, e.g. UWB.

The second radio of each of the first communication device 2004, 2006 and the second communication device 2002 may be configured to form the communication link 2012, 2014 with the second communication device 2002. The second radio may be a wireless local area network radio and may be configured to generate a directional beam to form the communication link 2012, 2014 based on a parameter set. The communication link 2012, 2014 may be any one of a line of sight communication link and an indirect communication link.

The first communication device 2004, 2006 may include an interface controller that may be configured to determine the parameter set based on the determined position of the second communication device 2002 and to provide the parameter set to the second radio.

The first communication device 2004, 2006 may be a communication terminal device, e.g. a laptop or mobile phone, and the second communication device 2002 may be an access point of the wireless local area network. The first communication device may be a mobile communication terminal device, for example. The mobile communication terminal device may be any one of a laptop, a tablet computer or a smartphone.

Alternatively, the second communication device 2002 may be a communication terminal device and the first communication device 2004, 2006 may be an access point of the wireless local area network.

The first radio may be releasably attached to the first communication device, e.g. as a tag or dongle. Alternatively, or in addition, the first radio may be separated, e.g. remote, distanced apart, to the second radio, e.g. as a tag or dongle. Thus, the first radio may be associated with the position of the second radio, e.g. coupled to the second radio. Alternatively, the first radio may be built-in the first communication device 2004, 2006.

The second radio may include an antenna array of a plurality of antenna elements configured to generate the directional antenna beam. The direction of the directional antenna beam may be controlled by any of a phase delay or a time delay of a signal provided to the plurality of antenna elements.

The first communication device further may include an initialization module coupled to the first radio and may be configured to initialize the determination of the position of the second communication device based on a trigger signal. The trigger signal may correspond to any one of: a change of location of the first communication device in a global positioning system, GPS. a change of operational mode of the first communication device; a further first communication device joining the wireless local area network; a time validity of a previously determined position of the second communication device; a change of priority of the communication link; and any combination thereof.

The first radio includes any one of: a time of flight, TOF, module configured to determine a time of flight of a signal between the first communication device and the second communication device; an angle of arrival, AOA, module configured to determine an angle of arrival of a signal transmitted from the second communication device at the first communication device, and any combination thereof.

The first radio and the interface controller may be configured as any one of a centralized connectivity management system and a computer-implemented program -defined gateway.

The first communication device may include a non-transitory computer readable medium to store the determined position of the second communication device.

The first communication device may include a clock configured to determine and store the time the position of the second communication device was determined.

The first communication device may include a global positioning system (GPS) configured to determine a position of the first communication device 2004, 2006 in a global position system at the timing the position of the second communication device 2002 was determined.

The first communication device may include a processor configured to determine the position of the second communication device 2002 in the global position system based on the determined global position of the first communication device 2004, 2006 and the determined position of the second communication device 2002. The first communication device may include a non-transitory computer readable medium to store the determined global position of the second communication device 2002.

The first communication device 2004, 2006 further may be configured to determine and store an altitude of the first communication device 2004, 2006 in the global position system, and a processor configured to determine an altitude of the second communication device 2002 in the global position at the time the position of second communication device 2002 was determined, e.g. based on the ToF and AoA.

The non-transitory computer readable medium further may be configured to store a plurality of information corresponding to the antenna setting of the second radio of the first communication device 2004, 2006 corresponding to the position of the first communication device 2004, 2006 relative to the second communication device 2002.

In another aspect, a non-transitory computer-readable medium may have instructions stored therein that when executed by a processor of a first communication device 2004, 2006 cause the processor to: determining, using a first radio of the first communication device 2004, 2006, a position of the second communication device 2002. The first radio may be a wideband near-field communication radio; forming, using a second radio of the first communication device, a communication link with the second communication device. The second radio may be a wireless local area network radio configured to generate a directional beam to form the communication link based on a parameter set. Further instructions may cause the processor configured to determine, using an interface controller of the first communication device, the parameter set based on the determined position of the second communication device and to provide the parameter set to the second radio.

The non-transitory computer-readable medium may further have instructions stored therein that when executed by the processor of the first communication device 2004, 2006 cause the processor to initialize, using a an initialization module of the first communication device coupled to the first radio, the determination of the position of the second communication device based on a trigger signal. The trigger signal may correspond to any one of: a change of location of the first communication device in a global positioning system, GPS. a change of operational mode of the first communication device; a further first communication device joining the wireless local area network; a time validity of a previously determined position of the second communication device; a change of priority of the communication link; and any combination thereof.

The first radio and the interface controller may be configured as any one of a centralized connectivity management system and a computer-implemented program-defined gateway.

The non-transitory computer-readable medium may further have instructions stored therein that when executed by the processor of the first communication device 2004, 2006 cause the processor configured to determine and store the time the position of the second communication device was determined.

The non-transitory computer-readable medium may further have instructions stored therein that when executed by the processor of the first communication device 2004, 2006 cause the processor configured to determine a position of the first communication device 2004, 2006 in a global position system at the timing the position of the second communication device was determined.

The non-transitory computer-readable medium may further have instructions stored therein that when executed by the processor of the first communication device 2004, 2006 cause the processor configured to determine the position of the second communication device in the global position system based on the determined global position of the first communication device and the determined position of the other communication device.

The non-transitory computer-readable medium may further have instructions stored therein that when executed by the processor of the first communication device cause the processor to store the determined global position of the second communication device.

The non-transitory computer-readable medium may further have instructions stored therein that when executed by the processor of the first communication device 2004, 2006 cause the processor, that the first communication device 2004, 2006 determines and stores an altitude of the first communication device 2004, 2006 in the global position system and determining an altitude of the second communication device in the global position at the time the position of second communication device was determined.

The non-transitory computer-readable medium may further have instructions stored therein that when executed by the processor of the first communication device 2004, 2006 cause the processor to store a plurality of information corresponding to an antenna setting of the second radio corresponding to the position of the first communication device 2004, 2006 relative to the second communication device.

In another aspect, a communication means may include: a first means for determining a position of another communication means. The first means may be a wideband near-field communication means (e.g. a radio); and a second means (e.g. a radio) for forming a communication link (e.g. direct (LOS) or indirect, direct or broadcast) with the other communication means (e.g. an AP, e.g. a router or base station) via a wireless local area network using a directional beam to form the communication link based on a parameter set; and an interface means for determining the parameter based on the determined position of the second communication device and for providing the parameter set to the second means.

The communication means may be a terminal communication means and the second communication device may be an access point of the wireless local area network. Alternatively, the other communication means may be a terminal communication means and the communication means may be an access point of the wireless local area network.

The first means may be releasably attached to the communication means. Alternatively, the first means may be remote to the second means and wherein the first means may be associated with the position of the second means. Alternatively, the first means may be built-in the communication means.

The second means may include an antenna array of a plurality of antenna elements configured to generate the directional antenna beam. The direction of the directional antenna beam may be controlled by any of a phase delay or a time delay of a signal provided to the plurality of antenna elements.

The communication means may be a mobile terminal communication means. The mobile terminal communication means may be any one of a laptop, a tablet computer or a smartphone.

The communication means further may include an initialization module coupled to the first means and may be configured to initialize the determination of the position of the other communication means based on a trigger signal. The trigger signal corresponds to any one of: a change of location of the communication means in a global positioning system, GPS. a change of operational mode of the communication means; a further communication means joining the wireless local area network; a time validity of a previously determined position of the other communication means; a change of priority of the communication link; and any combination thereof.

The communication link may be any one of a line of sight communication link and an indirect communication link.

The first means may include any one of: a time of flight, TOF, module configured to determine a time of flight of a signal between the communication means and the other communication means; an angle of arrival, AOA, module configured to determine an angle of arrival of a signal transmitted from the other communication means at the communication means, and any combination thereof, e.g. implemented as a software-module or processor. The first means and the interface controller may be configured as any one of a centralized connectivity management system and a computer-implemented program -defined gateway.

The first means may include a storing means, e.g. a local non-transitory computer readable medium or a cloud server, to store the determined position of the other communication means.

The first means may include a clock configured to determine and store the time the position of the other communication means was determined.

The first means may include a GPS configured to determine a position of the communication means in a global position system at the timing the position of the other communication means was determined.

The first means may include a processor configured to determine the position of the other communication means in the global position system based on the determined global position of the communication means and the determined position of the other communication device.

The first means may include a storing means to store the determined global position of the other communication means.

The communication means further may be configured to determine and store an altitude of the communication means in the global position system and configured to determine an altitude of the other communication means in the global position at the time the position of other communication means was determined.

The non-transitory computer readable medium further may be configured to store a plurality of information corresponding to an antenna setting of the second means corresponding to the position of the communication means relative to the other communication means.

In another aspect, a method to establish a communication link between a first communication device 2004, 2006 2004, 2006 and a second communication device 2002 is provided. Each of the first communication device 2004, 2006 and the second communication device 2002 includes: a first radio that may be a wideband near-field communication radio; and a second radio configured to form the communication link. The communication link may be a wireless local area network connection; wherein at least one of the second radios of the first communication device 2004, 2006 and the second communication device 2002 may be configured to generate a directional beam to form the communication link based on a parameter set; and wherein the first communication device 2004, 2006 of the first communication device 2004, 2006 and the second communication device 2002 forming the directional beam further includes an interface controller configured to determine the parameter set based on the determined position of the second communication device 2002 of the first communication device 2004, 2006 and the second communication device 2002 and to provide the parameter set to the second radio of the first communication device 2004, 2006 forming the directional beam. The method including: determining, using the first radio of the first communication device 2004, 2006, a position of the second communication device 2002. The first radio may be a wideband near-field communication radio; forming, using the second radio of the first communication device 2004, 2006, a communication link with the second communication device 2002. The second radio may be a wireless local area network radio configured to generate a directional beam to form the communication link based on a parameter set; determining, using the interface controller of the first communication device 2004, 2006 configured to determine the parameter set based on the determined position of the second communication device 2002 and to provide the parameter set to the second radio of the first communication device 2004, 2006.

The first communication device 2004, 2006 may be a communication terminal device and the second communication device 2002 may be an access point of the wireless local area network. Alternatively, the second communication device 2002 may be a communication terminal device and the first communication device 2004, 2006 may be an access point of the wireless local area network.

The second radio may include an antenna array of a plurality of antenna elements configured to generate the directional antenna beam, and wherein the processor controls the direction of the directional antenna beam by any of a phase delay or a time delay of a signal provided to the plurality of antenna elements.

The first communication device 2004, 2006 may be a mobile communication terminal device. The mobile communication terminal device may be any one of a laptop, a tablet computer or a smartphone

The method may further include initializing, using a an initialization module of the first communication device 2004, 2006 coupled to the first radio, the determination of the position of the second communication device 2002 based on a trigger signal. The trigger signal corresponds to any one of: a change of location of the first communication device 2004, 2006 in a global positioning system, GPS. a change of operational mode of the first communication device 2004, 2006; a further first communication device 2004, 2006 joining the wireless local area network; a time validity of a previously determined position of the second communication device 2002; a change of priority of the communication link; and any combination thereof.

The communication link may be any one of a line of sight communication link and an indirect communication link. The first radio may determine any one of: a time of flight, TOF, of a signal between the first communication device 2004, 2006 and the second communication device 2002; an angle of arrival, AOA, an angle of arrival of a signal transmitted from the second communication device 2002 at the first communication device 2004, 2006, and any combination thereof.

The first radio and the interface controller may be configured as any one of a centralized connectivity management system and a computer-implemented program -defined gateway.

The method may further include a determining and storing the time the position of the second communication device 2002 was determined.

The method may further include determining a position of the first communication device 2004, 2006 in a global position system at the timing the position of the second communication device 2002 was determined.

The method may further include determining the position of the second communication device 2002 in the global position system based on the determined global position of the first communication device 2004, 2006 and the determined position of the other communication device.

The method may further include storing the determined global position of the second communication device 2002.

The method may further include the first communication device 2004, 2006 determining and storing an altitude of the first communication device 2004, 2006 in the global position system and determining an altitude of the second communication device 2002 in the global position at the time the position of second communication device 2002 was determined.

The method may further include storing a plurality of information corresponding to an antenna setting of the second radio corresponding to the position of the first communication device 2004, 2006 relative to the second communication device 2002.

In another aspect a communication terminal device may include a radio configured to form a communication link with an access point of a wireless local area network, and a non-transitory computer readable medium having instructions stored therein that when executed by a processor of the communication terminal device cause the processor to: transmit, using the radio, information to the access point of the wireless local area network. The information corresponds to a mobility of the communication terminal device and a priority factor of the communication terminal device for the bandwidth allocation by the access point.

The radio supports a maximum bandwidth, wherein a low priority factor corresponds to a bandwidth allocated by the access point that may be lower than the maximum bandwidth supported by the radio.

The radio includes an antenna array of a plurality of antenna elements configured to generate a directional antenna beam.

The direction of the directional antenna beam may be controlled by any of a phase delay or a time delay of a signal provided to the plurality of antenna elements.

The communication terminal device may be a mobile communication terminal device.

The mobile communication terminal device may be any one of a laptop, a tablet computer or a smartphone

The communication link may be any one of a line of sight communication link and an indirect communication link.

A non-transitory computer readable medium may store the priority factor.

In another aspect, a non-transitory computer-readable medium may have instructions stored therein that when executed by a processor causes the processor to: transmit, using the radio, information to the access point of the wireless local area network. The information corresponds to a mobility of the communication terminal device and a priority factor of the communication terminal device for the bandwidth allocation by the access point.

The radio supports a maximum bandwidth, wherein a low priority factor corresponds to a bandwidth allocated by the access point that may be lower than the maximum bandwidth supported by the radio.

The radio includes an antenna array of a plurality of antenna elements configured to generate a directional antenna beam.

The direction of the directional antenna beam may be controlled by any of a phase delay or a time delay of a signal provided to the plurality of antenna elements.

The communication terminal device may be a mobile communication terminal device.

The mobile communication terminal device may be any one of a laptop, a tablet computer or a smartphone

The communication link may be any one of a line of sight communication link and an indirect communication link.

A non-transitory computer readable medium may store the priority factor.

A terminal communication means may include a radio means for forming a communication link with an access means of a wireless local area network, and a means for transmitting, using the radio means, information to the access means. The information corresponds to a mobility of the terminal communication means and a priority factor of the terminal communication means for the bandwidth allocation by the access means.

The radio means supports a maximum bandwidth, wherein a low priority factor corresponds to a bandwidth allocated by the access point that may be lower than the maximum bandwidth supported by the radio.

The radio means includes an antenna array of a plurality of antenna elements configured to generate a directional antenna beam.

The direction of the directional antenna beam may be controlled by any of a phase delay or a time delay of a signal provided to the plurality of antenna elements.

The terminal communication means may be a mobile terminal communication means.

The mobile terminal communication means may be any one of a laptop, a tablet computer or a smartphone

The communication link may be any one of a line of sight communication link and an indirect communication link.

A storing means for storing the priority factor.

FIG.20 shows a diagram illustrating an access point communication device 2002 for a wireless local area network, including: a radio configured to form communication links with a plurality of communication terminal devices 2004, 2006 for the wireless local area network, and a non-transitory computer readable medium having a priority factor stored therein for each of the communication terminal devices, wherein at least one of the priority factors may be received from the respective communication terminal device 2004, 2006 via the corresponding communication link 2012, 2014. The non-transitory computer readable medium further includes instructions stored therein that when executed by a processor of the access point communication device 2002 cause the processor to allocate a bandwidth of the radio based on the stored priority factors.

The non-transitory computer readable medium further may store information corresponding to a mobility of the communication terminal devices 2004, 2006, wherein at least some of the information corresponding to the mobility of the respective communication terminal devices 2004, 2006 may be received from the respective communication terminal device via the corresponding communication link.

The radio of the communication terminal device supports a maximum bandwidth, wherein a low priority factor corresponds to an allocated bandwidth that may be lower than the maximum bandwidth supported by the radio of the communication terminal device.

At least one of the communication terminal devices 2004, 2006 may be a mobile communication terminal device.

The mobile communication terminal device may be any one of a laptop, a tablet computer or a smartphone

The communication links may be any one of a line of sight communication link and an indirect communication link.

In another aspect, the access point communication device 2002 for a wireless local area network, may include: a radio configured to form communication links with a plurality of communication terminal devices 2004, 2006 for the wireless local area network, and a non-transitory computer readable medium having information stored therein corresponding to a mobility of the communication terminal devices 2004, 2006, and to determine a network connectivity strength of the communication links corresponding to the position of the communication terminal devices 2004, 2006 in the environment of the access point communication device 2004, 2006.

The non-transitory computer readable medium further includes instructions stored therein that when executed by a processor of the access point communication device 2002 cause the processor to increase the network connectivity strength of at least one of the communication links.

Further including instructions to transmit a signal corresponding to a weak network connectivity strength to at least one of the communication terminal devices 2004, 2006. Note, a weak network connectivity strength may refer to a network connectivity strength near or below a predefined threshold value. The threshold value may be a fixed value or dynamically adjusted, e.g. depending on the applications running. For example, a communication device receiving a video call while streaming a video may increase the threshold value for allowing both applications running smoothly, e.g. without noticeable decrease of user experience, on the communication device.

One of the information corresponding to the mobility of the respective communication terminal devices 2004, 2006 may be received from the respective communication terminal device via the corresponding communication link.

The radio of the access point communication device 2002 supports a bandwidth, wherein, when the position of a communication terminal device corresponds to a network connectivity strength below a predetermined threshold value, the access point communication device 2002 allocates a larger bandwidth to the respective communication link corresponding to the respective communication terminal device.

At least one of the communication terminal devices 2004, 2006 may be a mobile communication terminal device.

The mobile communication terminal device may be any one of a laptop, a tablet computer or a smartphone

The communication links may be any one of a line of sight communication link and an indirect communication link.

The access point communication device 2002 may generate network connectivity strength map of the environment of the access point communication device 2004, 2006.

The access point communication device 2002 transmits the generated map to the first communication devices 2004, 2006.

In another aspect, an access point communication means for a wireless local area network, including: a radio means for forming communication links with a plurality of terminal communication means for the wireless local area network, and a storing means for storing information corresponding to a mobility of the terminal communication means, and for generating a network connectivity strength of the communication links corresponding to the position of the terminal communication means in the environment of the access point communication means.

The storing means further includes instructions stored therein that when executed by a processing means of the access point communication means cause the processing means to: increase the network connectivity strength of at least one of the communication links.

The storing means further includes instructions stored therein that when executed by a processing means of the access point communication means cause the processing means to transmit a signal corresponding to a weak network connectivity strength to at least one of the terminal communication means.

At least some of the information corresponding to the mobility of the respective terminal communication means may be received from the respective terminal communication means via the corresponding communication link.

The radio of the access point communication means supports a bandwidth, wherein, when the position of a terminal communication means corresponds to a network connectivity strength below a predetermined threshold value, the access point communication means allocates a larger bandwidth of the respective communication link corresponding to respective terminal communication means.

At least one of the terminal communication means may be a mobile terminal communication means. The mobile terminal communication means may be any one of a laptop, a tablet computer or a smartphone

The communication links may be any one of a line of sight communication link and an indirect communication link.

The access point communication means may generate network connectivity strength map of the environment of the access point communication means.

In the following, various aspects of the present disclosure will be illustrated:

Example 1a is a communication device, including a first radio configured to determine a position of another communication device, wherein the first radio is a wideband near-field communication radio; and a second radio configured to form a communication link with the other communication device, wherein the second radio is a wireless local area network radio configured to generate a directional beam to form the communication link based on a parameter set; and an interface controller configured to determine the parameter set based on the determined position of the other communication device and to provide the parameter set to the second radio.

In Example 2a, the subject matter of Example 1a can optionally include that the communication device is a communication terminal device and the other communication device is an access point of the wireless local area network.

In Example 3a, the subject matter of Example 1a or 2a can optionally include that the other communication device is a communication terminal device and the communication device is an access point of the wireless local area network.

In Example 4a, the subject matter of any one of Examples 1a to 3a can optionally include that the first radio is releasably attached to the communication device.

In Example 5a, the subject matter of any one of Examples 1a to 4a can optionally include that the first radio is remote to the second radio and wherein the first radio is associated with the position of the second radio.

In Example 6a, the subject matter of any one of Examples 1a to 5a can optionally include that the first radio is built-in the communication device.

In Example 7a, the subject matter of any one of Examples 1a to 6a can optionally include that the second radio includes an antenna array of a plurality of antenna elements configured to generate the directional antenna beam.

In Example 8a, the subject matter of any one of Examples 1a to 7a can optionally include that the direction of the directional antenna beam is controlled by any of a phase delay or a time delay of a signal provided to the plurality of antenna elements.

In Example 9a, the subject matter of any one of Examples 1a to 8a can optionally include that the communication device is a mobile communication terminal device.

In Example 10a, the subject matter of any one of Examples 1a to 9a can optionally include that the mobile communication terminal device is any one of a laptop, a tablet computer or a smartphone

In Example 11a, the subject matter of any one of Examples 1a to 10a can optionally include that the communication device further including an initialization module coupled to the first radio and configured to initialize the determination of the position of the other communication device based on a trigger signal.

In Example 12a, the subject matter of any one of Examples 1a to 11a can optionally include that the trigger signal corresponds to any one of: a change of location of the communication device in a global positioning system, GPS. a change of operational mode of the communication device; a further communication device joining the wireless local area network; a time validity of a previously determined position of the other communication device; a change of priority of the communication link; and any combination thereof.

In Example 13a, the subject matter of any one of Examples 1a to 12a can optionally include that the communication link is any one of a line of sight communication link and an indirect communication link.

In Example 14a, the subject matter of any one of Examples 1a to 13a can optionally include that the first radio includes any one of: a time of flight, TOF, module configured to determine a time of flight of a signal between the communication device and the other communication device; an angle of arrival, AOA, module configured to determine an angle of arrival of a signal transmitted from the other communication device at the communication device, and any combination thereof.

In Example 15a, the subject matter of any one of Examples 1a to 14a can optionally include that the first radio and the interface controller are configured as any one of a centralized connectivity management system and a computer-implemented program -defined gateway.

In Example 16a, the subject matter of any one of Examples 1a to 15a can optionally further include a non-transitory computer readable medium to store the determined position of the other communication device.

In Example 17a, the subject matter of any one of Examples 1a to 16a can optionally further include a clock configured to determine and store the time the position of the other communication device was determined.

In Example 18a, the subject matter of any one of Examples 1a to 17a can optionally further include a GPS configured to determine a position of the communication device in a global position system at the timing the position of the other communication device was determined.

In Example 19a, the subject matter of any one of Examples 1a to 18a can optionally further include a processor configured to determine the position of the other communication device in the global position system based on the determined global position of the communication device and the determined position of the other communication device.

In Example 20a, the subject matter of any one of Examples 1a to 19a can optionally further include a non-transitory computer readable medium to store the determined global position of the other communication device.

In Example 21a, the subject matter of any one of Examples 1a to 20a can optionally include that the communication device further configured to determine and store an altitude of the communication device in the global position system and configured to determine an altitude of the other communication device in the global position at the time the position of other communication device was determined.

In Example 22a, the subject matter of any one of Examples 1a to 21a can optionally include that the non-transitory computer readable medium further configured to store a plurality of information corresponding to an antenna setting of the second radio corresponding to the position of the communication device relative to the other communication device.

Example 1b is a non-transitory computer-readable medium having instructions stored therein that when executed by a processor of a communication device cause the processor to: determining, using a first radio of the communication device, a position of another communication device, wherein the first radio is a wideband near-field communication radio; forming, using a second radio of the communication device, a communication link with the other communication device, wherein the second radio is a wireless local area network radio configured to generate a directional beam to form the communication link based on a parameter set; determining, using an interface controller of the communication device configured to determine the parameter set based on the determined position of the other communication device and to provide the parameter set to the second radio.

In Example 2b, the subject matter of Example 1b can optionally include that the communication device is a communication terminal device and the other communication device is an access point of the wireless local area network.

In Example 3b, the subject matter of any one of Examples 1b to can optionally include that the other communication device is a communication terminal device and the communication device is an access point of the wireless local area network.

In Example 4b, the subject matter of any one of Examples 1b to 3b can optionally include that the second radio includes an antenna array of a plurality of antenna elements configured to generate the directional antenna beam, and wherein the processor controls the direction of the directional antenna beam by any of a phase delay or a time delay of a signal provided to the plurality of antenna elements.

In Example 5b, the subject matter of any one of Examples 1b to 4b can optionally include that the communication device is a mobile communication terminal device.

In Example 6b, the subject matter of any one of Examples 1b to 5b can optionally include that the mobile communication terminal device is any one of a laptop, a tablet computer or a smartphone

In Example 7b, the subject matter of any one of Examples 1b to 6b can optionally further include initializing, using a an initialization module of the communication device coupled to the first radio, the determination of the position of the other communication device based on a trigger signal.

In Example 8b, the subject matter of any one of Examples 1b to 7b can optionally include that the trigger signal corresponds to any one of: a change of location of the communication device in a global positioning system, GPS. a change of operational mode of the communication device; a further communication device joining the wireless local area network; a time validity of a previously determined position of the other communication device; a change of priority of the communication link; and any combination thereof.

In Example 9b, the subject matter of any one of Examples 1b to 8b can optionally include that the communication link is any one of a line of sight communication link and an indirect communication link.

In Example 10b, the subject matter of any one of Examples 1b to 9b can optionally include that the first radio determines any one of: a time of flight, TOF, of a signal between the communication device and the other communication device; an angle of arrival, AOA, an angle of arrival of a signal transmitted from the other communication device at the communication device, and any combination thereof.

In Example 11b, the subject matter of any one of Examples 1b to 10b can optionally include that the first radio and the interface controller are configured as any one of a centralized connectivity management system and a computer-implemented program -defined gateway.

In Example 12b, the subject matter of any one of Examples 1b to 11b can optionally further include determining and storing the time the position of the other communication device was determined.

In Example 13b, the subject matter of any one of Examples 1b to 12b can optionally further include determining a position of the communication device in a global position system at the timing the position of the other communication device was determined.

In Example 14b, the subject matter of any one of Examples 1b to 13b can optionally further include determining the position of the other communication device in the global position system based on the determined global position of the communication device and the determined position of the other communication device.

In Example 15b, the subject matter of any one of Examples 1b to 14b can optionally further include storing the determined global position of the other communication device.

In Example 16b, the subject matter of any one of Examples 1b to 15b can optionally include that the communication device determining and storing an altitude of the communication device in the global position system and determining an altitude of the other communication device in the global position at the time the position of other communication device was determined.

In Example 17b, the subject matter of any one of Examples 1b to 16b can optionally further include storing a plurality of information corresponding to an antenna setting of the second radio corresponding to the position of the communication device relative to the other communication device.

Example 1c is a communication means, including: a first means for determining a position of another communication means, wherein the first means is a wideband near-field communication means; and a second means for forming a communication link with the other communication means via a wireless local area network using a directional beam to form the communication link based on a parameter set; and an interface means for determining the parameter based on the determined position of the other communication device and for providing the parameter set to the second means.

In Example 2c, the subject matter of Example 1c can optionally include that the communication means is a terminal communication means and the other communication device is an access point of the wireless local area network.

In Example 3c, the subject matter of any one of Examples 1c to 2c can optionally include that the other communication device is a terminal communication means and the communication means is an access point of the wireless local area network.

In Example 4c, the subject matter of any one of Examples 1c to 3c can optionally include that the first means is releasably attached to the communication means.

In Example 5c, the subject matter of any one of Examples 1c to 4c can optionally include that the first means is remote to the second means and wherein the first means is associated with the position of the second means.

In Example 6c, the subject matter of any one of Examples 1c to 5c can optionally include that the first means is built-in the communication means.

In Example 7c, the subject matter of any one of Examples 1c to 6c can optionally include that the second means includes an antenna array of a plurality of antenna elements configured to generate the directional antenna beam.

In Example 8c, the subject matter of any one of Examples 1c to 7c can optionally include that the direction of the directional antenna beam is controlled by any of a phase delay or a time delay of a signal provided to the plurality of antenna elements.

In Example 9c, the subject matter of any one of Examples 1c to 8c can optionally include that the communication means is a mobile terminal communication means.

In Example 10c, the subject matter of any one of Examples 1c to 9c can optionally include that the mobile terminal communication means is any one of a laptop, a tablet computer or a smartphone.

In Example 11c, the subject matter of any one of Examples 1c to 10c can optionally include that the communication means further including an initialization module coupled to the first means and configured to initialize the determination of the position of the other communication means based on a trigger signal.

In Example 12c, the subject matter of any one of Examples 1c to 11c can optionally include that the trigger signal corresponds to any one of: a change of location of the communication means in a global positioning system, GPS. a change of operational mode of the communication means; a further communication means joining the wireless local area network; a time validity of a previously determined position of the other communication means; a change of priority of the communication link; and any combination thereof.

In Example 13c, the subject matter of any one of Examples 1c to 12c can optionally include that the communication link is any one of a line of sight communication link and an indirect communication link.

In Example 14c, the subject matter of any one of Examples 1c to 13c can optionally include that the first means includes any one of: a time of flight, TOF, module configured to determine a time of flight of a signal between the communication means and the other communication means; an angle of arrival, AOA, module configured to determine an angle of arrival of a signal transmitted from the other communication means at the communication means, and any combination thereof.

In Example 15c, the subject matter of any one of Examples 1c to 14c can optionally include that the first means and the interface controller are configured as any one of a centralized connectivity management system and a computer-implemented program -defined gateway.

In Example 16c, the subject matter of any one of Examples 1c to 15c can optionally further include a storing means to store the determined position of the other communication means.

In Example 17c, the subject matter of any one of Examples 1c to 16c can optionally further include a clock configured to determine and store the time the position of the other communication means was determined.

In Example 18c, the subject matter of any one of Examples 1c to 17c can optionally further include a GPS configured to determine a position of the communication means in a global position system at the timing the position of the other communication means was determined.

In Example 19c, the subject matter of any one of Examples 1c to 18c can optionally further include a processor configured to determine the position of the other communication means in the global position system based on the determined global position of the communication means and the determined position of the other communication device.

In Example 20c, the subject matter of any one of Examples 1c to 19c can optionally further include a storing means to store the determined global position of the other communication means.

In Example 21c, the subject matter of any one of Examples 1c to 20c can optionally include that the communication means further configured to determine and store an altitude of the communication means in the global position system and to determine an altitude of the other communication means in the global position at the time the position of other communication means was determined.

In Example 22c, the subject matter of any one of Examples 1c to 21c can optionally include that the non-transitory computer readable medium further configured to store a plurality of information corresponding to an antenna setting of the second means corresponding to the position of the communication means relative to the other communication means.

Example 1d is a method to establish a communication link between a first communication device and a second communication device, each of the first communication device and the second communication device including: a first radio that is a wideband near-field communication radio; and a second radio configured to form the communication link, wherein the communication link is a wireless local area network; wherein at least one of the second radios of the first communication device and the second communication device is configured to generate a directional beam to form the communication link based on a parameter set; and wherein the communication device of the first communication device and the second communication device forming the directional beam further includes an interface controller configured to determine the parameter set based on the determined position of the other communication device of the first communication device and the second communication device and to provide the parameter set to the second radio of the communication device forming the directional beam. The method may include: determining, using a first radio of the communication device, a position of another communication device, wherein the first radio is a wideband near-field communication radio; forming, using a second radio of the communication device, a communication link with the other communication device, wherein the second radio is a wireless local area network radio configured to generate a directional beam to form the communication link based on a parameter set; determining, using an interface controller of the communication device configured to determine the parameter set based on the determined position of the other communication device and to provide the parameter set to the second radio.

In Example 2d, the subject matter of Example 1d can optionally include that the communication device is a communication terminal device and the other communication device is an access point of the wireless local area network.

In Example 3d, the subject matter of any one of Examples 1d to 2d can optionally include that the other communication device is a communication terminal device and the communication device is an access point of the wireless local area network.

In Example 4d, the subject matter of any one of Examples 1d to 3d can optionally include that the second radio includes an antenna array of a plurality of antenna elements configured to generate the directional antenna beam, and wherein the processor controls the direction of the directional antenna beam by any of a phase delay or a time delay of a signal provided to the plurality of antenna elements.

In Example 5d, the subject matter of any one of Examples 1d to 4d can optionally include that the communication device is a mobile communication terminal device.

In Example 6d, the subject matter of any one of Examples 1d to 5d can optionally include that the mobile communication terminal device is any one of a laptop, a tablet computer or a smartphone

In Example 7d, the subject matter of any one of Examples 1d to 6d can optionally further include initializing, using a an initialization module of the communication device coupled to the first radio, the determination of the position of the other communication device based on a trigger signal.

In Example 8d, the subject matter of any one of Examples 1d to 7d can optionally include that the trigger signal corresponds to any one of: a change of location of the communication device in a global positioning system, GPS. a change of operational mode of the communication device; a further communication device joining the wireless local area network; a time validity of a previously determined position of the other communication device; a change of priority of the communication link; and any combination thereof.

In Example 9d, the subject matter of any one of Examples 1d to 8d can optionally include that the communication link is any one of a line of sight communication link and an indirect communication link.

In Example 10d, the subject matter of any one of Examples 1d to 9d can optionally include that the first radio determines any one of: a time of flight, TOF, of a signal between the communication device and the other communication device; an angle of arrival, AOA, an angle of arrival of a signal transmitted from the other communication device at the communication device, and any combination thereof.

In Example 11d, the subject matter of any one of Examples 1d to 10d can optionally include that the first radio and the interface controller are configured as any one of a centralized connectivity management system and a computer-implemented program -defined gateway.

In Example 12d, the subject matter of any one of Examples 1d to 11d can optionally further include determining and storing the time the position of the other communication device was determined.

In Example 13d, the subject matter of any one of Examples 1d to 12d can optionally further include determining a position of the communication device in a global position system at the timing the position of the other communication device was determined.

In Example 14d, the subject matter of any one of Examples 1d to 13d can optionally further include determining the position of the other communication device in the global position system based on the determined global position of the communication device and the determined position of the other communication device.

In Example 15d, the subject matter of any one of Examples 1d to 14d can optionally further include storing the determined global position of the other communication device.

In Example 16d, the subject matter of any one of Examples 1d to 15d can optionally include that the communication device determining and storing an altitude of the communication device in the global position system and determining an altitude of the other communication device in the global position at the time the position of other communication device was determined.

In Example 17d, the subject matter of any one of Examples 1d to 16d can optionally further include storing a plurality of information corresponding to an antenna setting of the second radio corresponding to the position of the communication device relative to the other communication device.

Example 1e is a communication terminal device, including: radio configured to form a communication link with an access point of a wireless local area network, and a non-transitory computer readable medium having instructions stored therein that when executed by a processor of the communication terminal device cause the processor to: transmit, using the radio, information to the access point of the wireless local area network, wherein the information corresponds to a mobility of the communication terminal device and a priority factor of the communication terminal device for the bandwidth allocation by the access point.

In Example 2e, the subject matter of Example 1e can optionally include that the radio supports a maximum bandwidth, wherein a low priority factor corresponds to a bandwidth allocated by the access point that is lower than the maximum bandwidth supported by the radio.

In Example 3e, the subject matter of any one of Examples 1e to 2e can optionally include that the radio includes an antenna array of a plurality of antenna elements configured to generate a directional antenna beam.

In Example 4e, the subject matter of any one of Examples 1e to 3e can optionally include that the direction of the directional antenna beam is controlled by any of a phase delay or a time delay of a signal provided to the plurality of antenna elements.

In Example 5e, the subject matter of any one of Examples 1e to 4e can optionally include that the communication terminal device is a mobile communication terminal device.

In Example 6e, the subject matter of any one of Examples 1e to 5e can optionally include that the mobile communication terminal device is any one of a laptop, a tablet computer or a smartphone

In Example 7e, the subject matter of any one of Examples 1e to 6e can optionally include that the communication link is any one of a line of sight communication link and an indirect communication link.

In Example 8e, the subject matter of any one of Examples 1e to 7e can optionally include that further including a non-transitory computer readable medium to store the priority factor.

Example 1f is a non-transitory computer-readable medium having instructions stored therein that when executed by a processor cause the processor to: transmit, using the radio, information to the access point of the wireless local area network, wherein the information corresponds to a mobility of the communication terminal device and a priority factor of the communication terminal device for the bandwidth allocation by the access point.

In Example 2f, the subject matter of Example 1f can optionally include that the radio supports a maximum bandwidth, wherein a low priority factor corresponds to a bandwidth allocated by the access point that is lower than the maximum bandwidth supported by the radio.

In Example 3f, the subject matter of any one of Examples 1f to 2f can optionally include that the radio includes an antenna array of a plurality of antenna elements configured to generate a directional antenna beam.

In Example 4f, the subject matter of any one of Examples 1f to 3f can optionally include that the direction of the directional antenna beam is controlled by any of a phase delay or a time delay of a signal provided to the plurality of antenna elements.

In Example 5f, the subject matter of any one of Examples 1f to 4f can optionally include that the communication terminal device is a mobile communication terminal device.

In Example 6f, the subject matter of any one of Examples 1f to 5f can optionally include that the mobile communication terminal device is any one of a laptop, a tablet computer or a smartphone

In Example 7f, the subject matter of any one of Examples 1f to 6f can optionally include that the communication link is any one of a line of sight communication link and an indirect communication link.

In Example 8f, the subject matter of any one of Examples 1f to 7f can optionally further include a non-transitory computer readable medium to store the priority factor.

Example 1g is a terminal communication means, including: a radio means for forming a communication link with an access means of a wireless local area network, and a means for transmitting, using the radio means, information to the access means, wherein the information corresponds to a mobility of the terminal communication means and a priority factor of the terminal communication means for the bandwidth allocation by the access means.

In Example 2g, the subject matter of Example 1g can optionally include that the radio means supports a maximum bandwidth, wherein a low priority factor corresponds to a bandwidth allocated by the access point that is lower than the maximum bandwidth supported by the radio.

In Example 3g, the subject matter of any one of Examples 1g to 2g can optionally include that the radio means includes an antenna array of a plurality of antenna elements configured to generate a directional antenna beam.

In Example 4g, the subject matter of any one of Examples 1g to 3g can optionally include that the direction of the directional antenna beam is controlled by any of a phase delay or a time delay of a signal provided to the plurality of antenna elements.

In Example 5g, the subject matter of any one of Examples 1g to 4g can optionally include that the terminal communication means is a mobile terminal communication means.

In Example 6g, the subject matter of any one of Examples 1g to 5g can optionally include that the mobile terminal communication means is any one of a laptop, a tablet computer or a smartphone

In Example 7g, the subject matter of any one of Examples 1g to 6g can optionally include that the communication link is any one of a line of sight communication link and an indirect communication link.

In Example 8g, the subject matter of any one of Examples 1g to 7g can optionally further include a storing means for storing the priority factor.

Example 1h is an access point communication device for a wireless local area network, including: a radio configured to form communication links with a plurality of communication terminal devices for the wireless local area network, and a non-transitory computer readable medium having a priority factor stored therein for each of the communication terminal devices, wherein at least one of the priority factors is received from the respective communication terminal device via the corresponding communication link, wherein the non-transitory computer readable medium further includes instructions stored therein that when executed by a processor of the access point communication device cause the processor to allocate a bandwidth of the radio based on the stored priority factors.

In Example 2h, the subject matter of Example 1h can optionally include that the non-transitory computer readable medium further stores information corresponding to a mobility of the communication terminal devices, wherein at least some of the information corresponding to the mobility of the respective communication terminal devices is received from the respective communication terminal device via the corresponding communication link.

In Example 3h, the subject matter of any one of Examples 1h to 2h can optionally include that the radio of the communication terminal device supports a maximum bandwidth, wherein a low priority factor corresponds to an allocated bandwidth that is lower than the maximum bandwidth supported by the radio of the communication terminal device.

In Example 4h, the subject matter of any one of Examples 1h to 3h can optionally include that at least one of the communication terminal device is a mobile communication terminal device.

In Example 5h, the subject matter of any one of Examples 1h to 4h can optionally include that the mobile communication terminal device is any one of a laptop, a tablet computer or a smartphone

In Example 6h, the subject matter of any one of Examples 1h to 5h can optionally include that the communication links are any one of a line of sight communication link and an indirect communication link.

Example 1i is an access point communication device for a wireless local area network, including: a radio configured to form communication links with a plurality of communication terminal devices for the wireless local area network, and a non-transitory computer readable medium having information stored therein corresponding to a mobility of the communication terminal devices, and to determine a network connectivity strength of the communication links corresponding to the position of the communication terminal devices in the environment of the access point communication device.

In Example 2i, the subject matter of Example 1i can optionally include that the non-transitory computer readable medium further includes instructions stored therein that when executed by a processor of the access point communication device cause the processor to increase the network connectivity strength of at least one of the communication links.

In Example 3i, the subject matter of any one of Examples 1i to 2i can optionally be configured to transmit a signal corresponding to a weak network connectivity strength to at least one of the communication terminal devices.

In Example 4i, the subject matter of any one of Examples 1i to 3i can optionally include that at least some of the information corresponding to the mobility of the respective communication terminal devices is received from the respective communication terminal device via the corresponding communication link.

In Example 5i, the subject matter of any one of Examples 1i to 4i can optionally include that the radio of the access point communication device supports a bandwidth, wherein, when the position of a communication terminal device corresponds to a network connectivity strength below a predetermined threshold value, the access point communication device is configured to allocate a larger bandwidth to the respective communication link corresponding to the respective communication terminal device.

In Example 6i, the subject matter of any one of Examples 1i to 5i can optionally include that at least one of the communication terminal device is a mobile communication terminal device.

In Example 7i, the subject matter of any one of Examples 1i to 6i can optionally include that the mobile communication terminal device is any one of a laptop, a tablet computer or a smartphone

In Example 8i, the subject matter of any one of Examples 1i to 7i can optionally include that the communication links are any one of a line of sight communication link and an indirect communication link.

In Example 9i, the subject matter of any one of Examples 1i to 8i can optionally include that the access point communication device is configured to generate a network connectivity strength map of the environment of the access point communication device.

In Example 10i, the subject matter of any one of Examples 1i to 9i can optionally include that the access point communication device transmits the generated map to the communication devices.

Example 1j is an access point communication means for a wireless local area network, including: a radio means for forming communication links with a plurality of terminal communication means for the wireless local area network, and a storing means for storing information corresponding to a mobility of the terminal communication means, and for generating a network connectivity strength of the communication links corresponding to the position of the terminal communication means in the environment of the access point communication means.

In Example 2j, the subject matter of Example 1j can optionally include that the storing means further includes instructions stored therein that when executed by a processing means of the access point communication means cause the processing means to: increase the network connectivity strength of at least one of the communication links.

In Example 3j, the subject matter of any one of Examples 1j to 2j can optionally include that the storing means further includes instructions stored therein that when executed by a processing means of the access point communication means cause the processing means to transmit a signal corresponding to a weak network connectivity strength to at least one of the terminal communication means.

In Example 4j, the subject matter of any one of Examples 1j to 3j can optionally include that at least some of the information corresponding to the mobility of the respective terminal communication means is received from the respective terminal communication means via the corresponding communication link.

In Example 5j, the subject matter of any one of Examples 1j to 4j can optionally include that the radio of the access point communication means supports a bandwidth, wherein, when the position of a terminal communication means corresponds to a network connectivity strength below a predetermined threshold value, the access point communication means allocates a larger bandwidth of the respective communication link corresponding to respective terminal communication means.

In Example 6j, the subject matter of any one of Examples 1j to 5j can optionally include that at least one of the terminal communication means is a mobile terminal communication means.

In Example 7j, the subject matter of any one of Examples 1j to 6j can optionally include that the mobile terminal communication means is any one of a laptop, a tablet computer or a smartphone

In Example 8j, the subject matter of any one of Examples 1j to 7j can optionally include that the communication links are any one of a line of sight communication link and an indirect communication link.

In Example 9j, the subject matter of any one of Examples 1j to 8j can optionally include that the access point communication means generates network connectivity strength map of the environment of the access point communication means.

In Example 10j, the subject matter of any one of Examples 1j to 9j can optionally include that the access point communication device transmits the generated map to the communication devices.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A communication device, comprising:

    a first radio configured to determine a position of another communication device, wherein the first radio is a wideband near-field communication radio;

a second radio configured to form a communication link with the other communication device, wherein the second radio is a wireless local area network radio configured to generate a directional beam to form the communication link based on a parameter set; and

an interface controller configured to determine the parameter set based on the determined position of the other communication device and to provide the parameter set to the second radio.

2. The communication device of claim 1,

wherein the communication device is a communication terminal device and the other communication device is an access point of the wireless local area network; and/or

wherein the other communication device is a communication terminal device, and the communication device is an access point of the wireless local area network.

3. The communication device of any one of claims 1 or 2,

wherein the first radio is releasably attached to the communication device; and/or

wherein the first radio is separated to the second radio and wherein the first radio is associated with the position of the second radio.

4. The communication device of any one of claims 1 to 3, further comprising:

an initialization module coupled to the first radio and configured to initialize the determination of the position of the other communication device based on a trigger signal;

preferably wherein the trigger signal corresponds to any one of:

a change of location of the communication device in a global positioning system (GPS);
a change of operational mode of the communication device;
a further communication device joining the wireless local area network;
a time validity of a previously determined position of the other communication device;
a change of priority of the communication link; or
any combination thereof.

5. The communication device of any one of claims 1 to 4,
wherein the first radio comprises any one of:

a time of flight (TOF) module configured to determine a time of flight of a signal between the communication device and the other communication device;
an angle of arrival (AOA) module configured to determine an angle of arrival of a signal transmitted from the other communication device at the communication device; or
any combination thereof.

6. The communication device of any one of claims 1 to 5, further comprising:
a non-transitory computer readable medium to store any one of:

a determined global position of the other communication device;
a time that the position of the other communication device was determined;
a determined global position of the other communication device; or
a plurality of information corresponding to an antenna setting of the second radio corresponding to the position of the communication device relative to the other communication device.

7. A communication terminal device, comprising:

radio configured to form a communication link with an access point of a wireless local area network, and
a non-transitory computer readable medium, having instructions stored therein, that when executed by a processor of the communication terminal device cause the processor to transmit, using the radio, information to the access point of the wireless local area network, wherein the information corresponds to a mobility of the communication terminal device and a priority factor of the communication terminal device for a bandwidth allocation by the access point.

8. The communication terminal device of claim 7,
wherein the radio supports a maximum bandwidth, and wherein a low priority factor corresponds to a bandwidth allocated by the access point that is lower than the maximum bandwidth supported by the radio.

9. The communication terminal device of any one of claims 7 or 8,

wherein the radio comprises an antenna array of a plurality of antenna elements configured to generate a directional antenna beam;
preferably wherein the direction of the directional antenna beam is controlled by any of a phase delay or a time delay of a signal provided to the plurality of antenna elements.

10. The communication terminal device of any one of claims 7 to 9,
wherein the communication link is any one of a line of sight communication link or an indirect communication link.

11. An access point communication device for a wireless local area network, comprising:

a radio to form communication links with a plurality of communication terminal devices for the wireless local area network, and
a non-transitory computer readable medium, having information stored therein corresponding to a mobility of the communication terminal devices, and to determine a network connectivity strength of the communication links corresponding to positions of the communication terminal devices in an environment of the access point communication device.

12. The access point communication device of claim 11,
wherein the non-transitory computer readable medium further comprises instructions stored therein that when executed by a processor of the access point communication device cause the processor to increase the network connectivity strength of at least one of the communication links.

13. The access point communication device of any one of claims 11 or 12,

configured to transmit a signal corresponding to a weak network connectivity strength to at least one of the communication terminal devices; and/or
wherein at least some of the information corresponding to the mobility of the respective communication terminal devices is received from the respective communication terminal device via the corresponding communication link.

14. The access point communication device of any one of claims 11 to 13,
wherein the radio of the access point communication device supports a bandwidth, wherein, when the position of a communication terminal device corresponds to a network connectivity strength below a predetermined threshold value, the access point communication device is configured to allocate a larger bandwidth to the respective communication link corresponding to the respective communication terminal device.

15. The access point communication device of any one of claims 11 to 14,
wherein the access point communication device is configured to generate a network connectivity strength map of the environment of the access point communication device.

FIG 1

FIG 2

FIG 3

FIG 4

Wi-Fi mmWave/
Wi-Fi 8

# FIG 5

500

UWB assisted WIFI Optimizer & smart beam steering Framework

Initialization Trigger ~502

UWB assisted smart detector

| Device Discovery Handler | Wireless optimizer |
|---|---|
| • ToF Module | • Generate coordinated msg |
| • AOA Module | • Fine Tune Algo params |

506          508

504

510

IPC             HOST

512

WIFI Subsystem /FW

514

UWB Assisted Optimizer

| Radiation Pattern Optimizer | Assisted Beam Forming | Feedback system Telemetry (coverage/throughput) |
|---|---|---|

516

518       520       522

FIG 6

600

Initialization
Trigger: Laptop movement/Laptop
Mode change/New device in scanning
602

Discovery
Analyze "Beacon Signal" to
confirm AP is UWB capable
604

Location
Calculate UWB enabled AP
location using ToF, AoA, range, TDoA
606

608
WIFI 8
Leverage Location of
AP for Beam Forming
in mmwave

Optimization
Wireless Module Change
Radiation Pattern by
switching beam of antenna
610

# FIG 7

700

## MAC header

| bytes | 2 | 2 | 6 | 6 | 6 | 702 | 2 | Variable | 4 |
|---|---|---|---|---|---|---|---|---|---|
| | Frame Control | Dura-tion | DA | SA | BSS ID | | Seq-cti | Frame Body | FCS |

| bytes | 8 | 2 | 2 | Variable | 704 | Variable | 2 | 8 | 4 | Variable |
|---|---|---|---|---|---|---|---|---|---|---|
| | Timestamp | Beacon Interval | Capability Info | SS ID | | Suppor-ted Rates | DS Parameter Set | CF Parameter Set | ICF Parameter Set | TIM |

Mandatory      Optional

| | Variable | 3 | 6 | 8 | 4 | 3 | Variable | Variable |
|---|---|---|---|---|---|---|---|---|
| | Country Info | Power Constraint | Channel Switch | Quiet | TPC Report | ERP | Extended rates | Robust Security Network |

Optional (continued)

Beacon Frame Structure

EP 4 576 860 A2

# FIG 8

Responder 804

812
Poll

Tloop          Treply

814
Response

Initiator          Responder
802              804

d1          d2

θ

808          d <          810
ANT 1      lambda/2    ANT 2
Rx1                     Rx2
Initiator
802

# FIG 9

# FIG 10

1000

| Zone | Beam_ID | Ant_Feed | Amplitude | Phase |
|------|---------|----------|-----------|-------|
| Zone1 | 1 | Ant_port_1_V0L;Ant_port_1_V1L;Ant_port_1_V2L;Ant_port_1_V3L; | 1;1;1;1 | 0;-45;-270;-270 |
| Zone2 | 2 | Ant_port_1_V0L;Ant_port_1_V1L;Ant_port_1_V2L;Ant_port_1_V3L; | 1;1;1;1 | 0;-315;-90;-90 |
| Zone3 | 3 | Ant_port_1_V0L;Ant_port_1_V1L;Ant_port_1_V2L;Ant_port_1_V3L; | 1;1;1;1 | 0;-90;-315;0 |
| Zone4 | 4 | Ant_port_1_V0L;Ant_port_1_V1L;Ant_port_1_V2L;Ant_port_1_V3L; | 1;1;1;1 | 0;0;-180;-225 |
| Zone5 | 5 | Ant_port_1_V0L;Ant_port_1_V1L;Ant_port_1_V2L;Ant_port_1_V3L; | 1;1;1;1 | 0;-180;-90;0 |
| Zone6 | 6 | Ant_port_1_V0L;Ant_port_1_V1L;Ant_port_1_V2L;Ant_port_1_V3L; | 1;1;1;1 | 0;-180;-180;-180 |
| Zone7 | 7 | Ant_port_1_V0L;Ant_port_1_V1L;Ant_port_1_V2L;Ant_port_1_V3L; | 1;1;1;1 | 0;-270;-270;-270 |
| Zone8 | 8 | Ant_port_1_V0L;Ant_port_1_V1L;Ant_port_1_V2L;Ant_port_1_V3L; | 1;1;1;1 | 0;-135;-45;-225 |

EP 4 576 860 A2

# FIG 11

1100

1102  UWB assisted WIFI Optimizer & smart beam steering Framework

| Initialization Trigger | ~502 |

UWB assisted smart detector

| Device Discovery Handler | Wireless optimizer |
|---|---|
| • ToF Module | • Generate coordinated msg |
| • AOA Module | • Fine Tune Algo params |

506

508

~504

510

IPC

IPC

HOST

512

WIFI
Subsystem
/FW

514

UWB Assisted Optimizer

| Radiation Pattern Optimizer | Assisted Beam Forming | Feedback system Telemetry (coverage/throughput) |
|---|---|---|

518

520

522

**FIG 12**

| Connectivity Performance suite —1102 | AP Device —1202 | WIFI FW —514 |

Advertize the UWB Capabilities —1206

Detect the available UWB capable devices —1208

1210

Enabling and read UWB Beacons

Authenticate the UWB Device
Enable the UWB Device, IDC and
FIRa interfaces

FIRA interface request for UWB Beacon details and trigger polling —1212

Share the UWB Beacon detail —1214

1216—

Read the Beacon pattern and
decode and notify WIFI FW

Read the Beacon pattern. Compare it with LUT
table stored on the UWB SW stack. Pick up
the right Antenna pattern and inform WIFI FW

Inform WIFI FW to use right antenna pattern —1218

EP 4 576 860 A2

# FIG 13

1300

UWB assisted WIFI Optimizer & smart beam steering Framework

Initialization Trigger ~502

UWB assisted smart detector

| Device Discovery Handler | Wireless optimizer |
|---|---|
| • ToF Module | • Generate coordinated msg |
| • AOA Module | • Fine Tune Algo params |

~504

506 508

510

IPC- Software defined Gateway

1312

HOST

WIFI
Subsystem
/FW

514

UWB Assisted Optimizer

| Radiation Pattern Optimizer | Assisted Beam Forming | Feedback system Telemetry (coverage/throughput) |
|---|---|---|

518 520 522

# FIG 14

UWB & WIFI communication using Spread Spectrum (SS)

1402

1404    1406                    1412        1416        1418

Input                                                    Output
Message | Channel | | Modulator |  Channel  | De- | | Channel | Message
          encoder                          modulator   decoder

                                            1410

1408 — | Spreading  |              | Spreading | — 1414
         generator                   generator

| Spread coordinated message using DSSS spreading sequence | — 1420

| Send spraed coordinated message to gateway device | — 1422

| Despread coordinated message using same spreading sequence | — 1424

| Translate coordinated message into format understood by Wi-Fi | — 1426

| Send translated coordinated message || to Wi-Fi device | — 1428

| Receive coordinated message and take appropriate action | — 1430

Legend | UWB device | — 504    | Gateway device | — 1312    | WIFI Device | — 514

# FIG 15

Printer
(Requires Bursty BW)
(Device Priority High)
(Device Type: Static)
— 1512

SmartPhone
(Requires Bursty BW)
(Device Priority-High)
(Device Type: Mobile)
— 1504

Wireless
Home Router
— 1502
Network AP

Air Conditioner
(Requires Low BW)
(Device Priority Low)
(Device Type: Static)
— 1506

TV
(Requires High BW)
(Device Priority-Low)
(Device Type: Static)
— 1510

Laptop
(Requires Bursty BW)
(Device Priority-High)
(Device Type: Mobile)
— 1508

EP 4 576 860 A2

FIG 16

## FIG 17

# FIG 18

# FIG 19

| User assigns different priority level to different communication devices | ⟋1902 |

↓

| AP distributes data BW according to competing communication devices priority and Max_BW support level | ⟋1904 |

↓

| AP captures signal quality and locations in a particular AP coverage area for learning during the operation, | ⟋1906 |

↓

| AP indicates user to move/shift location for improving signal strength and (or enhances signal quality | ⟋1908 |

FIG 20